# EUROPÄISCHE PATENTANMELDUNG

(11) **EP 4 799 768 A2**
(43) Veröffentlichungstag der Anmeldung: **02.09.2026**
(21) Anmeldenummer: 26160305.4
(22) Anmeldetag: 24.02.2026
(51) Int. Cl.: B25F 5/02

(54) **HANDGEFÜHRTES BEARBEITUNGSGERÄT**

(30) Priorität: 26.02.2025 DE 102025107303; 26.02.2025 DE 102025107305; 26.02.2025 DE 102025107307
(71) Anmelder: Andreas Stihl AG & Co. KG, 71336 Waiblingen (DE)
(72) Erfinder: Heinzelmann, Georg, 71364 Winnenden (DE); Karrar, Carel, 73098 Rechberghausen (DE); Henke, Timo, 71394 Kernen im Remstal (DE)
(74) Vertreter: Patentanwälte Ruff, Wilhelm, Beier, Dauster & Partner mbB

(57) **Zusammenfassung**

Die Erfindung betrifft ein handgeführtes Bearbeitungsgerät (100), aufweisend: eine Aufnahmeeinrichtung (49) zum auswechselbaren Aufnehmen eines elektrischen Batteriepacks (200) in einer Aufnahmerichtung (60), wobei die Aufnahmeeinrichtung (49) einen Aufnahmeraum (74) für den Batteriepack (200) aufweist, eine bezüglich einer Längserstreckungsrichtung (11) des Bearbeitungsgeräts (100) vordere Aufnahmeeinrichtungsseite (79A), wobei die vordere Aufnahmeeinrichtungsseite (79A) den Aufnahmeraum (74) teilweise definiert, und zumindest zwei Sichtöffnungen (80), die der vorderen Aufnahmeeinrichtungsseite (79A) gegenüberliegen und die den Aufnahmeraum (74) jeweils entgegen der Längserstreckungsrichtung (11) nach außen öffnen, wobei die zumindest zwei Sichtöffnungen (80) relativ zueinander derart angeordnet sind, dass sie in einer sowohl zu der Aufnahmerichtung (60) als auch zu der Längserstreckungsrichtung (11) orthogonalen Breitenrichtung (81) des Bearbeitungsgeräts (100) betrachtet - bei nicht-aufgenommenem Batteriepack (200) - blickdurchlässig miteinander fluchten.

## Beschreibung

Die Erfindung betrifft, insbesondere mit mehreren Erfindungsaspekten jeweils, ein handgeführtes Bearbeitungsgerät.

Es ist eine Aufgabe der vorliegenden Erfindung, ein handgeführtes Bearbeitungsgerät zu schaffen, welches besondere, insbesondere verbesserte, Eigenschaften aufweist. Insbesondere soll ein Batteriepack-Aufnahmeeinrichtung des Bearbeitungsgeräts unter Leichtbaugesichtspunkten und/oder im Hinblick auf ihre Funktionalität bei nicht-aufgenommenem Batteriepack modifiziert werden.

Diese Aufgabe wird gelöst durch den Gegenstand des unabhängigen Patentanspruchs. Bevorzugte Ausführungsformen sind Gegenstand der abhängigen Patentansprüche. Der Wortlaut sämtlicher Patentansprüche wird durch ausdrückliche Bezugnahme zum Inhalt der vorliegenden Beschreibung gemacht.

Vorstehend und/oder nachfolgend erwähnte Erfindungsaspekte können allein oder gemeinsam verwirklicht werden. Ein handgeführtes Bearbeitungsgerät gemäß einem der Erfindungsaspekte kann insofern gegebenenfalls auch noch gemäß einem anderen Erfindungsaspekt weiter ausgestaltet sein. Insbesondere können die Erfindungsaspekte in demselben handgeführten Bearbeitungsgerät realisiert sein.

Ausgestaltungen der Erfindung - sofern nicht ausdrücklich in abgeschlossener Weise angegeben oder sich anderweitig ausschließend - können prinzipiell von jedem der Erfindungsaspekte für sich genommen oder von einer Kombination einiger oder aller Erfindungsaspekte ausgehen. Insbesondere gilt Entsprechendes hinsichtlich zweckmäßiger Angaben.

Ein handgeführtes Bearbeitungsgerät gemäß einem ersten Aspekt der Erfindung weist eine Aufnahmeeinrichtung zum auswechselbaren Aufnehmen eines elektrischen Batteriepacks auf. Dabei ist die Aufnahmeeinrichtung dazu ausgebildet, den Batteriepack in einer Aufnahmerichtung aufzunehmen. Der aufgenommene Batteriepack kann entgegen der Aufnahmerichtung von der Aufnahmeeinrichtung entfernt werden. Die Aufnahmeeinrichtung hat einen Aufnahmeraum für den Batteriepack. Das Bearbeitungsgerät hat eine Längserstreckungsrichtung. Insbesondere ist das Bearbeitungsgerät entlang der Längserstreckungsrichtung längserstreckt. Das Bearbeitungsgerät hat eine bezüglich der Längserstreckungsrichtung vordere Aufnahmeeinrichtungsseite. Insbesondere ist die vordere Aufnahmeeinrichtungsseite eine bezüglich der Längserstreckungsrichtung vorne angeordnete Seite der Aufnahmeeinrichtung.

"Vorne" kann "einer Werkzeugeinrichtung zugewandt" bedeuten. Die vordere Aufnahmeeinrichtungsseite definiert den Aufnahmeraum zumindest teilweise. Insbesondere handelt es sich bei der Aufnahmeeinrichtungsseite um einen Innenseitenbereich der Aufnahmeeinrichtung. Das Bearbeitungsgerät weist zumindest, insbesondere genau, zwei Sichtöffnungen auf, die der vorderen Aufnahmeeinrichtungsseite gegenüberliegen und die den Aufnahmeraum jeweils entgegen der Längserstreckungsrichtung nach außen öffnen. Insbesondere liegen die Sichtöffnungen der vorderen Aufnahmeeinrichtungsseite quer zu der Aufnahmerichtung und/oder entlang der Längserstreckungsrichtung gegenüber. Das Bearbeitungsgerät weist eine Breitenrichtung auf, die sowohl zu der Aufnahmerichtung als auch zu der Längserstreckungsrichtung orthogonal verläuft. Insbesondere ist das Bearbeitungsgerät entlang der Breitenrichtung quererstreckt. Die beiden Sichtöffnungen sind relativ zueinander derart angeordnet, dass sie in Breitenrichtung betrachtet - bei nicht-aufgenommenem Batteriepack - blickdurchlässig miteinander fluchten. Dabei können sich die beiden Sichtöffnungen mit Blick in Breitenrichtung vollständig oder teilweise überdecken. Insbesondere fluchten die beiden Sichtöffnungen in einer Seitenansicht des Bearbeitungsgeräts, insbesondere mit Blickrichtung parallel zu einer Antriebsachse einer Antriebseinrichtung des Bearbeitungsgeräts, blickdurchlässig miteinander. Die Antriebsachse kann parallel zu der Breitenrichtung verlaufen.

Insbesondere sind die Sichtöffnungen je teilweise an einer hinteren Aufnahmeeinrichtungsseite des Bearbeitungsgeräts angeordnet, wobei die hintere Aufnahmeeinrichtungsseite der vorderen Aufnahmeeinrichtungsseite gegenüberliegt. Die vordere Aufnahmeeinrichtungsseite kann bei nicht-aufgenommenem Batteriepack nach hinten weisend freiliegen. Bei aufgenommenem Batteriepack kann sich die vordere Aufnahmeeinrichtungsseite in Längserstreckungsrichtung, insbesondere unmittelbar, an den aufgenommenen Batteriepack anschließen. Die hintere Aufnahmeeinrichtungsseite kann bei nicht-aufgenommenem Batteriepack nach vorne weisend freiliegen. Bei aufgenommenem Batteriepack kann sich die hintere Aufnahmeeinrichtungsseite entgegen der Längserstreckungsrichtung, insbesondere unmittelbar, an den aufgenommenen Batteriepack anschließen. Mit anderen Worten: Der aufgenommene Batteriepack kann entlang der Längserstreckungsrichtung, insbesondere unmittelbar, zwischen der vorderen Aufnahmeeinrichtungsseite und der hinteren Aufnahmeeinrichtungsseite angeordnet sein. Die vordere Aufnahmeeinrichtungsseite und die hintere Aufnahmeeinrichtungsseite können den aufgenommenen Batteriepack flankieren.

Die Sichtöffnungen können helfen, die Masse der Aufnahmeeinrichtung und somit des gesamten Bearbeitungsgeräts zu reduzieren. Alternativ oder zusätzlich können die Sichtöffnungen eine Kühlung des aufgenommenen Batteriepacks mit Umgebungsluft begünstigen. Weiter alternativ oder zusätzlich können die Sichtöffnungen einen Blick auf eine an dem aufgenommenen Batteriepack vorhandene Beschriftung ermöglichen. Weiter alternativ oder zusätzlich können die Sichtöffnungen - bei nicht-aufgenommenem Batteriepack - einen Blick auf die vordere Aufnahmeeinrichtungsseite ermöglichen, insbesondere um eine dort vorhandene Einrichtung und/oder Markierung abzulesen.

Zweckmäßig kann der Begriff "Aufnahmeeinrichtung" synonym zu dem Begriff "Batteriepack-Aufnahmeeinrichtung" verwendet werden.

Zweckmäßig kann der Aufnahmeraum komplementär zu zumindest einem Steckabschnitt des Batteriepacks ausgebildet sein.

Zweckmäßig kann die vordere Aufnahmeeinrichtungsseite einem vorderen Führungsflächenabschnitt der Aufnahmeeinrichtung entsprechen oder parallel zu dem vorderen Führungsflächenabschnitt verlaufen, wobei der vordere Führungsflächenabschnitt zum Führen des Batteriepacks entlang der Aufnahmerichtung ausgebildet ist.

Zweckmäßig weist die Längserstreckungsrichtung zu einer Werkzeuganbringungseinrichtung des Bearbeitungsgeräts, wobei an der Werkzeuganbringungseinrichtung die Werkzeugeinrichtung für das Bearbeitungsgerät lösbar montierbar ist. Insbesondere bildet die Werkzeuganbringungseinrichtung einen in Längserstreckungsrichtung vordersten Endbereich des Bearbeitungsgeräts aus.

Zweckmäßig weist das Bearbeitungsgerät eine elektrische Antriebseinrichtung auf, die zum Bereitstellen von Antriebsleistung für die an dem Bearbeitungsgerät montierbare Werkzeugeinrichtung basierend auf dem aufgenommenen Batteriepack entnommener elektrischer Energie ausgebildet ist.

Zweckmäßig ist das Bearbeitungsgerät batterieelektrisch betreibbar ausgebildet.

**In** Ausgestaltung der Erfindung, insbesondere ausgehend von zumindest dem ersten Erfindungsaspekt, flankieren die zumindest zwei Sichtöffnungen entlang der Breitenrichtung einen entlang der Aufnahmerichtung durchgängigen Stegabschnitt des Bearbeitungsgeräts. Der entlang der Aufnahmerichtung durchgängig verlaufende Stegabschnitt kann entlang der Breitenrichtung, insbesondere unmittelbar, zwischen den zumindest zwei Sichtöffnungen angeordnet sein. Insbesondere bildet der Stegabschnitt einen bezüglich der Längserstreckungsrichtung hinteren Führungsflächenabschnitt des Bearbeitungsgeräts zum Führen des Batteriepacks entlang der Aufnahmerichtung zumindest teilweise aus. Insbesondere kann der Stegabschnitt einem Aufsetzen einer Kante des Batteriepacks auf einem Öffnungsrand der jeweiligen Sichtöffnung entgegenwirken, wenn der Batteriepack in Aufnahmerichtung eingeführt wird.

**In** weiterer Ausgestaltung der Erfindung, insbesondere ausgehend von zumindest dem ersten Erfindungsaspekt, weist der Stegabschnitt einen, insbesondere integralen und/oder inneren, Leitungskanal des Bearbeitungsgeräts auf. Der Leitungskanal ist zum Führen zumindest einer elektrischen Leitung des Bearbeitungsgeräts ausgebildet. Insbesondere ist die zumindest eine Leitung durch den Leitungskanal hindurchgeführt. Die zumindest eine durch den Leitungskanal hindurchgeführte elektrische Leitung kann eine Bedieneinrichtung des Bearbeitungsgeräts mit einer elektronischen Steuerungseinrichtung des Bearbeitungsgeräts verbinden. Insbesondere können zwei oder mehrere elektrische Leitungen in Aufnahmerichtung durch den Leitungskanal hindurchgeführt sein, um die Bedieneinrichtung mit der elektronischen Steuerungseinrichtung in Aufnahmerichtung zu verbinden. Die zumindest eine elektrische Leitung kann insofern entlang der Aufnahmerichtung zwischen der Bedieneinrichtung und der Steuerungseinrichtung längserstreckt sein. Die Steuerungseinrichtung kann zum Steuern einer Griffheizung des hinteren Griffabschnitts ausgebildet sein.

**In** weiterer Ausgestaltung der Erfindung weist der Stegabschnitt eine entlang der Breitenrichtung gemessene Stegbreite auf. Der Aufnahmeraum hat eine entlang der Breitenrichtung, insbesondere innenseitig, gemessene Aufnahmeraumbreite. Dabei entspricht die, insbesondere maximale, Aufnahmeraumbreite einem 1,5-Fachen bis 6-Fachen, insbesondere einem in etwa 3-Fachen, der, insbesondere minimalen, Stegbreite.

**In** weiterer Ausgestaltung der Erfindung, insbesondere ausgehend von zumindest dem ersten Erfindungsaspekt, weist das Bearbeitungsgerät eine Aufstelleinrichtung auf. Die Aufstelleinrichtung definiert eine Aufstellebene. Dabei ist die Aufstelleinrichtung dazu ausgebildet, einen Untergrund für das Bearbeitungsgerät in der Aufstellebene zu berühren, insbesondere wenn das Bearbeitungsgerät auf dem Untergrund aufgestellt bzw. abgelegt wird. Die Aufnahmerichtung verläuft winkelig, insbesondere rechtwinkelig oder spitzwinkelig, zu der Aufstellebene.

Zweckmäßig kann die Aufnahmerichtung derart spitzwinklig zu der Aufstellebene verlaufen, dass sie entgegen der Längserstreckungsrichtung schräg nach hinten unten weist und/oder dass sie mit der Aufstellebene einen spitzen Winkel einschließt, der sich bezüglich der Längserstreckungsrichtung schräg nach hinten unten aufweitet. "Hinten" kann "von der Werkzeuganbringungseinrichtung weg weisend" bedeuten. Der spitze Winkel kann 60° bis 85°, insbesondere in etwa 80° betragen.

Zweckmäßig kann die Aufstelleinrichtung zumindest einen Standfuß und/oder zumindest eine Standrippe aufweisen.

**In** weiterer Ausgestaltung der Erfindung, insbesondere ausgehend von zumindest dem ersten Erfindungsaspekt, schließt sich eine elektronische Steuerungseinrichtung des Bearbeitungsgeräts im Bereich eines der Aufstellebene zugewandten Endes des Aufnahmeraums entgegen der Längserstreckungsrichtung an die Aufnahmeeinrichtung an.

Zweckmäßig kann zur Aufnahme der elektronische Steuerungseinrichtung kann ein Hohlraum vorgesehen sein, der sich im Inneren einer äußerlich erkennbaren Ausbeulung eines Gehäuses des Bearbeitungsgeräts verbirgt.

Zweckmäßig kann das Bearbeitungsgerät zwei elektronische Steuerungseinrichtungen aufweisen, wobei nur eine dieser elektronischen Steuerungseinrichtungen sich im Bereich des der Aufstellebene zugewandten Endes des Aufnahmeraums entgegen der Längserstreckungsrichtung an die Aufnahmeeinrichtung anschließt. Insbesondere handelt es sich bei der Steuerungseinrichtung, die sich im Bereich des der Aufstellebene zugewandten Endes des Aufnahmeraums entgegen der Längserstreckungsrichtung an die Aufnahmeeinrichtung anschließt, um jene zur Steuerung der Griffheizung.

Zweckmäßig kann das Ende des Aufnahmeraums, in dessen Bereich sich die Steuerungseinrichtung zur Steuerung der Griffheizung anschließt, ein von der Werkzeugeinrichtung abgewandtes Ende des Aufnahmeraums sein.

In weiterer Ausgestaltung der Erfindung, insbesondere ausgehend von zumindest dem ersten Erfindungsaspekt, weist das Bearbeitungsgerät elektrische Anschlusselemente zum elektrischen Anschließen des aufgenommenen Batteriepacks auf. Die Anschlusselemente sind entlang der Aufnahmerichtung zwischen den Sichtöffnungen und der Aufstelleinrichtung des Bearbeitungsgeräts angeordnet. Insbesondere weisen die elektrischen Anschlusselemente entgegen der Aufnahmerichtung. Alternativ oder zusätzlich weist die Aufnahmeeinrichtung eine Aufnahmeöffnung zum Hineinführen des aufzunehmenden Batteriepacks und eine der Aufnahmeöffnung entlang der Aufnahmerichtung gegenüberliegende, insbesondere vergitterte, Durchgangsöffnung auf. Die Anschlusselemente können insbesondere im Bereich eines die Durchgangsöffnung umfassenden Endes der Aufnahmeeinrichtung vorhanden sein.

In weiterer Ausgestaltung der Erfindung, insbesondere ausgehend von zumindest dem ersten Erfindungsaspekt, sind die Sichtöffnungen bezüglich einer Längsmittelebene des Bearbeitungsgeräts spiegelsymmetrisch ausgebildet.

Zweckmäßig weist das Bearbeitungsgerät einen hinteren Handgriffabschnitt auf, der ein bezüglich der Längserstreckungsrichtung des Bearbeitungsgeräts hinteres, insbesondere von der Werkzeuganbringungseinrichtung abgewandtes, Ende des Bearbeitungsgeräts definiert. Die Längsmittelebene ist insbesondere durch den hinteren Handgriffabschnitt definiert.

In weiterer Ausgestaltung der Erfindung, insbesondere ausgehend von zumindest dem ersten Erfindungsaspekt, sind die Sichtöffnungen entlang der Aufnahmerichtung jeweils länglich erstreckt. Dabei können die Sichtöffnungen jeweils eine entlang der Aufnahmerichtung gemessene Öffnungslänge und/oder eine senkrecht zu der Aufnahmerichtung gemessene Öffnungsbreite aufweisen. Insbesondere beträgt die Öffnungslänge einer jeweiligen der Sichtöffnung 10 mm bis 120 mm, insbesondere 30 mm bis 50 mm. Alternativ oder zusätzlich kann die Öffnungsbreite einer jeweiligen der Sichtöffnungen 10 mm bis 50 mm betragen.

Zweckmäßig kann die Öffnungslänge bzw. die Öffnungsbreite jeweils dem maximalen freien Abstand einander gegenüberliegender Randabschnitte eines Öffnungsrands der betreffenden Sichtöffnung in Aufnahmerichtung bzw. senkrecht zu der Aufnahmerichtung entsprechen. Alternativ oder zusätzlich kann die Öffnungsbreite der Sichtöffnungen senkrecht zu der Längsmittelebene gemessen sein.

In weiterer Ausgestaltung der Erfindung, insbesondere ausgehend von zumindest dem ersten Erfindungsaspekt, weist der Aufnahmeraum eine im Wesentlichen prismatische, insbesondere quaderartige, Formgebung auf. Dabei hat die Formgebung des Aufnahmeraums zumindest zwei entlang der Aufnahmerichtung längserstreckte Kantenbereiche, wobei die Kantenbereiche einen den Aufnahmeraum teilweise definierenden hinteren Führungsflächenabschnitt des Bearbeitungsgeräts entlang der Breitenrichtung flankieren. Der hintere Führungsflächenabschnitt kann also entlang der Breitenrichtung zwischen den Kantenbereichen angeordnet sein. Die Kantenbereiche sind insbesondere Innenkantenbereiche. Je eine der Sichtöffnungen unterbricht dabei einen der Kantenbereiche. Insbesondere ist ein jeweiliger der Kantenbereiche um ein 1,5-Faches bis 15-Faches der Öffnungslänge der Sichtöffnungen längserstreckt. Die Unterbrechung der Kantenbereiche durch die Sichtöffnungen kann eine besonders robuste Ausführung des Bearbeitungsgeräts erlauben, insbesondere durch gezielte Schwächung der Struktur des den Aufnahmeraum begrenzenden Gehäuses des Bearbeitungsgeräts.

**In** weiterer Ausgestaltung der Erfindung, insbesondere zumindest ausgehend von dem ersten Erfindungsaspekt, tangiert - in einer sich mit Blick in Breitenrichtung ergebenden Seitenansicht des Bearbeitungsgeräts - eine zu der Aufstellebene orthogonal verlaufende virtuelle Gerade Öffnungsränder der Sichtöffnungen bezüglich der Längserstreckungsrichtung des Bearbeitungsgeräts vorne. Mit anderen Worten: Die gedachte Gerade tangiert einen jeweiligen Öffnungsrand an einem bezüglich der Längserstreckungsrichtung vordersten, insbesondere also der Werkzeugeinrichtung zugewandten, Punkt auf dem betreffenden Öffnungsrand. Die die Öffnungsränder vorne tangierende und zu der Aufstellebene orthogonale Gerade verläuft dabei entweder bezüglich der Längserstreckungsrichtung des Bearbeitungsgeräts vor den elektrischen Anschlusselementen oder durch die elektrischen Anschlusselemente hindurch.

Ein handgeführtes Bearbeitungsgerät gemäß einem zweiten Aspekt der Erfindung weist eine Aufnahmeeinrichtung auf, wobei die Aufnahmeeinrichtung zum auswechselbaren Aufnehmen eines elektrischen Batteriepacks in einer Aufnahmerichtung ausgebildet ist. Der aufgenommene Batteriepack kann entgegen der Aufnahmerichtung von der Aufnahmeeinrichtung entfernt werden. Die Aufnahmeeinrichtung hat eine Aufnahmeöffnung zum Hineinführen des aufzunehmenden Batteriepacks. Das Bearbeitungsgerät weist einen Schmiermitteltank auf, der zum Bevorraten von Schmiermittel ausgebildet ist. Insbesondere kann mittels des Schmiermittels eine an dem Bearbeitungsgerät montierbare Werkzeugeinrichtung geschmiert werden. Das Bearbeitungsgerät weist eine Füllstandanzeigeeinrichtung auf, die zum Anzeigen eines Füllstands an bevorratetem Schmiermittel ausgebildet ist. Der mittels der Füllstandanzeigeeinrichtung anzeigbare Füllstand ist insbesondere ein Füllstand an Schmiermittel in dem Schmiermitteltank. Die Füllstandanzeigeeinrichtung ist derart angeordnet, dass der angezeigte Füllstand - bei nicht-aufgenommenem Batteriepack - von außen her durch die Aufnahmeöffnung für den Batteriepack hindurchblickend ablesbar ist. Mit anderen Worten: Von außen her durch die Aufnahmeöffnung hindurch betrachtet ist die Füllstandanzeigeeinrichtung derart visuell erkennbar, dass der mittels der Füllstandanzeigeeinrichtung angezeigte Füllstand durch die Aufnahmeöffnung für den Batteriepack hindurch abgelesen werden kann. Ein Bediener des Bearbeitungsgeräts kann also, wenn er von außen auf das Bearbeitungsgerät durch die Aufnahmeöffnung hindurchblickt, den Füllstand des Schmiermitteltanks, insbesondere die Füllstandanzeigeeinrichtung, ablesen.

Zweckmäßig kann ein zum Bevorraten von Schmiermittel verfügbares Schmiermitteltankinnenvolumen so bemessen sein, dass mindestens ein vollständig mit elektrischer Energie aufgeladener Batteriepack, insbesondere mehr als ein Batteriepack nacheinander, zur Versorgung einer elektrischen Antriebseinrichtung des Bearbeitungsgeräts entladen werden kann, bevor eine vollständige Schmiermitteltankfüllung an Schmiermittel aufgebraucht ist, wobei die Antriebseinrichtung zur Bereitstellung elektrischer Antriebsleistung für die Werkzeugeinrichtung auf Basis dem betreffenden Batteriepack entnommener elektrischer Energie ausgebildet ist. Darauf basierend kann es von besonderem Vorteil sein, bei einem Wechsel des Batteriepacks den Füllstand ablesen zu können, insbesondere um bewerten zu können, ob ein Nachfüllen von Schmiermittel notwendig ist. Durch die Sichtbarkeit der Füllstandanzeigeeinrichtung bei entnommenem Batteriepack kann ein nicht zu frühzeitig aber rechtzeitig auf die Notwendigkeit, Schmiermittel nachzufüllen, aufmerksam gemacht werden.

Zweckmäßig ist die Füllstandanzeigeeinrichtung bei aufgenommenem Batteriepack, insbesondere nicht-ablesbar, verdeckt. Insbesondere verdeckt der aufgenommene Batteriepack die Füllstandanzeigeeinrichtung, so dass die Füllstandanzeigeeinrichtung bei aufgenommenem Batteriepack nicht durch die Aufnahmeöffnung hindurch ablesbar ist.

In Ausgestaltung der Erfindung, insbesondere zumindest ausgehend von dem zweiten Erfindungsaspekt, weist der Schmiermitteltank zumindest einen transparenten Tankwandabschnitt auf. Dabei bildet der zumindest eine transparente Tankwandabschnitt die Füllstandanzeigeeinrichtung aus. Insofern kann der zumindest eine transparente Tankwandabschnitt derart angeordnet sein, dass der angezeigte Füllstand bei nicht-aufgenommenem Batteriepack von außen her durch die Aufnahmeöffnung für den Batteriepack hindurchblickend ablesbar ist.

Zweckmäßig kann sich ein innenseitig an dem transparenten Tankwandabschnitt anliegender Schmiermittelpegel äußerlich erkennbar abzeichnen, insbesondere so dass der sich abzeichnende Schmiermittelpegel an dem transparenten Tankwandabschnitt außenseitig visuell erfassbar ist.

In weiterer Ausgestaltung der Erfindung, insbesondere zumindest ausgehend von dem zweiten Erfindungsaspekt, bildet die Füllstandanzeigeeinrichtung eine bezüglich einer Längserstreckungsrichtung des Bearbeitungsgeräts vordere Aufnahmeeinrichtungsseite des Bearbeitungsgeräts zumindest teilweise aus. Die vordere Aufnahmeeinrichtungsseite kann ein vorderer Führungsflächenabschnitt zum Führen des Batteriepacks entlang der Aufnahmerichtung sein oder parallel zu diesem vorderen Führungsflächenabschnitt verlaufen. Die vordere Aufnahmeeinrichtungsseite definiert einen Aufnahmeraum der Aufnahmeeinrichtung teilweise.

In weiterer Ausgestaltung der Erfindung, insbesondere zumindest ausgehend von dem zweiten Erfindungsaspekt, weist das Bearbeitungsgerät eine Aufstelleinrichtung auf. Die Aufstelleinrichtung definiert eine Aufstellebene und ist zum Berühren eines Untergrunds für das Bearbeitungsgerät in der Aufstellebene ausgebildet. Dabei verläuft die Aufnahmerichtung winkelig, insbesondere rechtwinkelig oder spitzwinkelig, zu der Aufstellebene. Zweckmäßig kann die Aufnahmerichtung derart spitzwinklig zu der Aufstellebene verlaufen, dass sie entgegen der Längserstreckungsrichtung schräg nach hinten unten weist und/oder dass sie mit der Aufstellebene einen spitzen Winkel einschließt, der sich bezüglich der Längserstreckungsrichtung schräg nach hinten unten aufweitet. "Hinten" kann "von der Werkzeuganbringungseinrichtung weg weisend" bedeuten. Der spitze Winkel kann 60° bis 85°, insbesondere in etwa 80° betragen.

In weiterer Ausgestaltung der Erfindung, insbesondere zumindest ausgehend von dem zweiten Erfindungsaspekt, sind die Aufnahmeöffnung und die Aufstelleinrichtung des Bearbeitungsgeräts einander entlang der Aufnahmerichtung gegenüberliegend angeordnet. Alternativ oder zusätzlich ist die Füllstandanzeigeeinrichtung, insbesondere blickwinkelangepasst, relativ zu der durch die Aufstelleinrichtung definierten Aufstellebene geneigt. Eine Neigung der Füllstandanzeigeeinrichtung kann einer Neigung der Aufnahmerichtung relativ zu der Aufstellebene entsprechen. Eine Neigung der Aufnahmeeinrichtung kann einem abschnittsweisen Verlauf eines Wandabschnittes des Schmiermittelstanks entsprechen, insbesondere können der Wandabschnitt des Schmiermitteltanks und der vordere Wandabschnitt parallel zueinander geneigt verlaufen.

In weiterer Ausgestaltung der Erfindung, insbesondere zumindest ausgehend von dem zweiten Erfindungsaspekt, weist die Füllstandanzeigeeinrichtung eine bei nicht-aufgenommenem Batteriepack von außen her durch die Aufnahmeöffnung hindurchblickend sichtbare Markierung als Ablesereferenz für den Füllstand auf. Die Markierung kann integral an einem die Füllstandanzeigeeinrichtung ausbildenden transparenten Tankwandabschnitt ausgebildet sein.

In weiterer Ausgestaltung der Erfindung, insbesondere zumindest ausgehend von dem zweiten Erfindungsaspekt, weist das Bearbeitungsgerät wenigstens eine Sichtöffnung auf, die den Aufnahmeraum der Aufnahmeeinrichtung, insbesondere quer zu der Aufnahmerichtung, nach außen öffnet. Dabei ist die Füllstandanzeigeeinrichtung derart angeordnet, dass der angezeigte Füllstand bei nicht-aufgenommenem Batteriepack von außen her durch die Sichtöffnung hindurchblickend ablesbar ist. Auf diese Weise kann eine weitere Möglichkeit zum Ablesen des Füllstands erreicht werden.

In weiterer Ausgestaltung der Erfindung, insbesondere zumindest ausgehend von dem zweiten Erfindungsaspekt, weist das Bearbeitungsgerät zumindest, insbesondere genau, zwei derartige Sichtöffnungen auf. Die Sichtöffnungen liegen der bezüglich der Längserstreckungsrichtung des Bearbeitungsgeräts vorderen Aufnahmeeinrichtungsseite gegenüber und öffnen den Aufnahmeraum jeweils entgegen der Längserstreckungsrichtung nach außen. Die Sichtöffnungen sind dabei relativ zueinander derart angeordnet, dass sie in einer sowohl zu der Aufnahmerichtung als auch zu der Längserstreckungsrichtung orthogonalen Breitenrichtung des Bearbeitungsgeräts betrachtet - bei nicht aufgenommenem Batteriepack - blickdurchlässig miteinander fluchten. Durch das Vorsehen von zumindest zwei Sichtöffnungen kann eine Anzahl an Ablesemöglichkeiten, insbesondere an Ableserichtungen, vergrößert werden.

In weiterer Ausgestaltung der Erfindung, insbesondere zumindest ausgehend von dem zweiten Erfindungsaspekt, hat die Aufnahmeeinrichtung einen, insbesondere nicht transparenten, Wandabschnitt. Der Wandabschnitt der Aufnahmeeinrichtung verdeckt den Schmiermitteltank, insbesondere einen transparenten Tankwandabschnitt des Schmiermitteltanks, teilweise. Der Wandabschnitt der Aufnahmeeinrichtung kann einer integrierten Kabelführung zum Führen elektrischer Kabel zu den elektrischen Anschlusselementen hin dienen. Alternativ oder zusätzlich kann der Wandabschnitt eine die Anschlusselemente tragende Kontaktplatte mechanisch aussteifen.

Zweckmäßig kann die Füllstandanzeigeeinrichtung, insbesondere der transparente Tankwandabschnitt, bis in einen Bodenbereich und/oder bis in einen Flankenseitenbereich des Bearbeitungsgeräts erstreckt sein, so dass sich zusätzlich zu der Möglichkeit des Ablesens durch die Aufnahmeöffnung und/oder die wenigstens eine Sichtöffnung hindurch weitere Ablesemöglichkeiten ergeben können.

**In** weiterer Ausgestaltung der Erfindung, insbesondere zumindest ausgehend von dem ersten Erfindungsaspekt und/oder dem zweiten Erfindungsaspekt, ist das Bearbeitungsgerät eine Motorsäge, insbesondere eine Motorkettensäge oder ein Trennschleifer.

Ein handgeführtes Bearbeitungsgerät gemäß einem dritten Aspekt der Erfindung weist eine Aufnahmeeinrichtung auf. Die Aufnahmeeinrichtung ist zum auswechselbaren Aufnehmen eines elektrischen Batteriepacks in einer Aufnahmerichtung des Bearbeitungsgeräts ausgebildet. Die "Aufnahmeeinrichtung" kann synonym als "Batteriepack-Aufnahmeeinrichtung" bezeichnet werden. Insbesondere geht mit dem Aufnehmen des Batteriepacks in Aufnahmerichtung ein elektrisches Anschließen des Batteriepacks an das Bearbeitungsgerät einher. Die Aufnahmeeinrichtung kann einen Batterieschacht aufweisen, in welchen der aufzunehmende Batteriepack in Aufnahmerichtung hineinschiebbar ist. Der Batterieschacht kann entlang der Aufnahmerichtung, insbesondere hohlprofilartig, längserstreckt sein. Die Aufnahmeeinrichtung des Bearbeitungsgeräts hat eine Aufnahmeöffnung. Die Aufnahmeeinrichtung kann durch ein einziges Bauteil gebildet sein oder durch mehrere Bauteile. Die Aufnahmeöffnung ist zum Hineinführen des aufzunehmenden Batteriepacks ausgebildet. Die Aufnahmeeinrichtung weist zudem eine Durchgangsöffnung auf. Die Durchgangsöffnung liegt der Aufnahmeöffnung, insbesondere entlang der Aufnahmerichtung, gegenüber. Die Durchgangsöffnung kann zum Hinauslassen von Schmutz ausgebildet sein. Das Bearbeitungsgerät weist ein Gitterelement auf. Das Gitterelement hat wenigstens drei Gitteröffnungen und ist zum schmutzdurchlässigen Vergittern der Durchgangsöffnung ausgebildet. Insbesondere ist die Durchgangsöffnung mittels des Gitterelements derart vergittert, dass durch die Gitteröffnungen definierte Teilbereiche der Durchgangsöffnung schmutzdurchlässig sind und/oder freiliegen. "Schmutzdurchlässig" kann insbesondere "flüssigkeits- und/oder festpartikeldurchlässig" bedeuten. Insbesondere ist das Gitterelement nicht-hölzern ausgebildet.

Durch den dritten Erfindungsaspekt soll insbesondere ohne zusätzliche Eingriffsmöglichkeit für eine Benutzerhand eine verbesserte Reinigungsfähigkeit einer Batteriepack-Aufnahmeeinrichtung des Bearbeitungsgeräts erreicht werden.

Die Durchgangsöffnung kann einen bezüglich der Aufnahmeöffnung zusätzlichen Pfad zur Passage von Schmutz bereitstellen. Das Gitterelement, insbesondere die wenigstens drei Gitteröffnungen, können eine Verkleinerung eines schmutzdurchlässigen Öffnungsquerschnitts relativ zu dem Gesamtöffnungsquerschnitt der Durchgangsöffnung bewirken. Dabei kann das Gitterelement, insbesondere seine Gitteröffnungen, das Hinauslassen von Schmutz in Aufnahmerichtung zulassen, aber ein Eindringen größerer Fremdkörper und/oder eines menschlichen Fingers entgegen der Aufnahmerichtung entgegenwirken bzw. ein solches Eindringen entgegen der Aufnahmerichtung behindern, insbesondere verhindern.

Zweckmäßig ist das handgeführte Bearbeitungsgerät batterieelektrisch betreibbar ausgebildet.

Zweckmäßig kann der Batteriepack ein elektrischer Akkupack sein.

Zweckmäßig ist der elektrische Batteriepack zum Speichern elektrischer Energie ausgebildet, auf Basis derer eine elektrische Antriebseinrichtung des Bearbeitungsgeräts Antriebsleistung für eine an dem Bearbeitungsgerät anbringbare Werkzeugeinrichtung bereitstellen kann.

In Ausgestaltung der Erfindung, insbesondere ausgehend von zumindest dem dritten Erfindungsaspekt, ist das Gitterelement für einen Prüfkörper undurchlässig, welcher insbesondere einen Außendurchmesser von minimal 2 mm und/oder maximal 50 mm aufweist. Ganz insbesondere kann der Prüfkörper einen Außendurchmesser von minimal 8 mm und/oder maximal 20 mm aufweisen. Insbesondere sind die Gitteröffnungen jeweils für den Prüfkörper undurchlässig. Zumindest in einer Öffnungsquerschnittserstreckungsrichtung können die jeweilige Gitteröffnung definierende Öffnungsrandabschnitte in einem Abstand zueinander angeordnet sein, der kleiner als der Außendurchmesser des Prüfkörpers ist. Der Außendurchmesser des Prüfkörpers kann insbesondere an einem Kugelabschnitt und/oder an einem Zylinderabschnitt des Prüfkörpers vorhanden sein. Beispielsweise kann der Außendurchmesser des Prüfkörpers 12 mm betragen. Insbesondere ist das Gitterelement nur für Flüssigkeit und Schmutzpartikel mit einem kleineren Außendurchmesser durchlässig.

In weiterer Ausgestaltung der Erfindung, insbesondere zumindest ausgehend von dem dritten Erfindungsaspekt, weist das Bearbeitungsgerät eine Aufstelleinrichtung auf, die eine Aufstellebene, insbesondere des Bearbeitungsgeräts oder für das Bearbeitungsgerät, definiert. Dabei ist die Aufstelleinrichtung zum Berühren eines Untergrunds in der Aufstellebene ausgebildet. Insbesondere ist die Aufstelleinrichtung dazu ausgebildet, den Untergrund in der Aufstellebene zu berühren, wenn das Bearbeitungsgerät auf dem Untergrund aufgestellt bzw. abgelegt werden soll. "Aufstellen" und/oder "ablegen" kann synonym zu "positionieren" verstanden werden. Die Aufstelleinrichtung kann beispielsweise Standfußabschnitte aufweisen.

Zweckmäßig verläuft die Aufnahmerichtung winklig zu der Aufstellebene. Winklig kann rechtwinklig oder spitzwinklig sein. Alternative Ausführungsformen, bei denen die Aufnahmerichtung parallel zu der Aufstellebene orientiert ist, können denkbar sein.

Besonders zweckmäßig kann die Aufnahmerichtung mit Blick in einer Breitenrichtung des Bearbeitungsgeräts, insbesondere also in einer Seitenansicht des Bearbeitungsgeräts, schräg zu der Aufstellebene verlaufen, insbesondere entweder nach vorne oder nach hinten geneigt.

Zweckmäßig schließt das Gitterelement zumindest oder nur abschnittsweise bündig mit einer, insbesondere unterseitigen und/oder im Wesentlichen parallel zu der Aufstellebene verlaufenden, Bodenfläche eines Gehäuses des Bearbeitungsgeräts ab. Die Aufstelleinrichtung kann integral mit dem Gehäuse ausgeformt sein. Es ist denkbar, dass nur ein Außenkantenabschnitt des Gitterelements bündig mit der Bodenfläche abschließt, während ein diesem mit der Bodenfläche bündig abschließenden Außenkantenabschnitt gegenüberliegender anderer Außenkantenabschnitt des Gitterelements entgegen der Aufnahmerichtung bezüglich der Bodenfläche zurückversetzt ist.

Zweckmäßig kann das Gitterelement entgegen der Aufnahmerichtung relativ zu der Bodenfläche zurückversetzt sein, insbesondere derart, dass kein Außenkantenabschnitt des Gitterelements bündig mit der Bodenfläche abschließt.

Zweckmäßig kann das Gehäuse des Bearbeitungsgeräts die elektrische Antriebseinrichtung des Bearbeitungsgeräts tragen und/oder einhausen.

In weiterer Ausgestaltung der Erfindung, insbesondere zumindest ausgehend von dem dritten Erfindungsaspekt, weist das Gitterelement einen Gitterabschnitt auf, welcher wenigstens einen Gitterlängsstab aufweist. Der Gitterlängsstab des Gitterabschnitts trennt dabei zwei der Gitteröffnungen des Gitterelements voneinander. Insbesondere verläuft der wenigstens eine Gitterlängsstab entlang einer Längserstreckungsrichtung des Bearbeitungsgeräts. Die Längserstreckungsrichtung kann von einem hinteren Handgriff des Bearbeitungsgeräts zu einer Werkzeuganbringungseinrichtung des Bearbeitungsgeräts weisen, wobei an der Werkzeuganbringungseinrichtung die Werkzeugeinrichtung lösbar montierbar ist. Insbesondere verläuft die Längserstreckungsrichtung parallel zu der Aufstellebene und parallel zu einer Längsmittelebene, wobei die Längsmittelebene orthogonal zu der Aufstellebene orientiert ist.

Zweckmäßig handelt es sich bei dem Gitterabschnitt des Gitterelements um einen Bereich, der alle Gitteröffnungen des Gitterelements, insbesondere gerade so, umfasst.

Zweckmäßig kann die Aufnahmerichtung derart spitzwinklig zu der Aufstellebene verlaufen, dass sie entgegen der Längserstreckungsrichtung schräg nach hinten unten weist und/oder dass sie mit der Aufstellebene einen spitzen Winkel einschließt, der sich bezüglich der Längserstreckungsrichtung schräg nach hinten unten aufweitet. "Hinten" kann "von der Werkzeuganbringungseinrichtung weg weisend" bedeuten. Der spitze Winkel kann 60° bis 85°, insbesondere in etwa 80° betragen.

Zweckmäßig weist der Gitterabschnitt zwei oder mehr Gitterlängsstäbe auf, die insbesondere im Wesentlichen parallel zueinander erstreckt sind.

In weiterer Ausgestaltung der Erfindung, insbesondere zumindest ausgehend von dem dritten Erfindungsaspekt, weist der Gitterabschnitt des Gitterelements einen Gitterquerstab auf. Der Gitterquerstab ist insbesondere verdickt. Insbesondere kann der Gitterquerstab relativ zu wenigstens einem Gitterlängsstab des Gitterabschnitts verdickt sein. Der Gitterquerstab kreuzt wenigstens einen Gitterlängsstab des Gitterelements, insbesondere integral. Der Gitterquerstab definiert wenigstens eine der Gitteröffnungen des Gitterelements teilweise.

Zweckmäßig kann der Gitterquerstab eine entlang der Längserstreckungsrichtung des Bearbeitungsgeräts gemessene Querstabbreite aufweisen. Der wenigstens eine Gitterlängsstab kann eine entlang einer Breitenrichtung des Bearbeitungsgeräts gemessene Längsstabbreite aufweisen. Die Breitenrichtung verläuft insbesondere senkrecht zu der Längserstreckungsrichtung und parallel zu der Aufstellebene. Die Querstabbreite kann einem 1-Fachen bis 10-Fachen, insbesondere einem 1,5-Fachen bis 5-Fachen, mehr insbesondere einem etwa 4-Fachen, der Längsstabbreite entsprechen.

Zweckmäßig entspricht die Längsstabbreite einem 1-Fachen bis 2-Fachen einer Wandstärke des Gitterelements. Die Wandstärke des Gitterelements kann minimal 1 mm und/oder maximal 2 mm, beispielsweise 1,3 mm, betragen.

Zweckmäßig entspricht die Querstabbreite einem 3-Fachen der Wandstärke des Gitterelements.

Zweckmäßig weist der Gitterquerstab eine, insbesondere unterseitige, integrale Fachwerkstruktur auf. Insbesondere kann die Fachwerkstruktur nur zu der Aufstellebene hin freiliegen.

Zweckmäßig kann genau ein Gitterquerstab vorhanden sein. Alternativ ist es denkbar, zwei oder mehr Gitterquerstäbe vorzusehen.

Zweckmäßig kann das Bearbeitungsgerät ein Griffrohr aufweisen, welches an dem Gehäuse angebracht ist, insbesondere so dass das Griffrohr entlang der Längserstreckungsrichtung im Wesentlichen zwischen der Werkzeuganbringungseinrichtung und der Aufnahmeeinrichtung angeordnet ist.

Zweckmäßig kann der Gitterquerstab von einem Kraftübertragungsabschnitt des Bearbeitungsgeräts aufgewiesen sein bzw. den Kraftübertragungsabschnitt teilweise ausbilden, wobei sich der Kraftübertragungsabschnitt an zumindest ein Befestigungsende des Griffrohrs anschließt. Der Kraftübertragungsabschnitt kann verstärkt und/oder verdickt ausgebildet sein.

Zweckmäßig können an einander entlang der Breitenrichtung gegenüberliegenden Enden des Gitterquerstabs integrale Gewindebohrungen vorgesehen sein, die je für eine Schraubverbindung des Gitterelements mit dem Gehäuse ausgebildet sind. Die Gewindebohrungen und/oder die Schraubverbindungen können Bestandteil des Kraftübertragungsabschnitts sein.

In weiterer Ausgestaltung der Erfindung, insbesondere zumindest ausgehend von dem dritten Erfindungsaspekt, weist das Gitterelement einen Rahmenabschnitt auf. Der Rahmenabschnitt ist insbesondere gitteröffnungsfrei. Der Rahmenabschnitt fasst den Gitterabschnitt des Gitterelements umlaufend ein. Insbesondere läuft der Rahmenabschnitt direkt außen an dem Gitterabschnitt geschlossen um den Gitterabschnitt herum um. Insbesondere sind der Gitterabschnitt und der Rahmenabschnitt integral aneinander ausgeformt.

Insbesondere kann sich der Gitterquerstab lediglich an einer Seite der Gitteröffnungen erstrecken. In anderen Worten: Der Gitterquerstab muss nicht zwischen Gitteröffnungen angeordnet sein, sondern kann bei manchen Ausführungsformen auch am Rand der Anordnung von Gitteröffnungen angeordnet sein.

Bei manchen Ausgestaltungen weist das Gitterelement - alternativ oder zusätzlich zu dem Gitterquerstab - einen, insbesondere verdickten, Gitterrandabschnitt auf, wobei der Gitterrandabschnitt quer zu wenigstens einem, insbesondere an den Gitterrandabschnitt integral angeformten, Gitterlängsstab des Gitterelements verläuft und wenigstens eine der Gitteröffnungen des Gitterelements teilweise definiert. Insbesondere kann der Gitterrandabschnitt eine, insbesondere unterseitige, integrale Fachwerkstruktur aufweisen.

Zweckmäßig ist das Gitterelement monolithisch ausgebildet.

In weiterer Ausgestaltung der Erfindung, insbesondere zumindest ausgehend von dem dritten Erfindungsaspekt, weist das Bearbeitungsgerät elektrische Anschlusselemente auf, die zum elektrischen Anschließen des aufgenommenen Batteriepacks ausgebildet sind. Dabei sind die Anschlusselemente von dem Gitterelement derart getragen, dass die Anschlusselemente entgegen der Aufnahmerichtung weisen.

Zweckmäßig können die Anschlusselemente an einem Zungenabschnitt des Gitterelements angeordnet sein. Der Zungenabschnitt ist insbesondere integraler Bestandteil des Rahmenabschnitts des Gitterelements. Die elektrischen Anschlusselemente können an dem Zungenabschnitt des Gitterelements angebracht sein.

Zweckmäßig ist der Zungenabschnitt senkrecht zu der Aufnahmerichtung und/oder entlang der Breitenrichtung von zwei Gitteröffnungen des Gitterelements flankiert. Der Zungenabschnitt kann entlang der Breitenrichtung zwischen wenigstens zwei Gitteröffnungen des Gitterelements angeordnet sein.

In weiterer Ausgestaltung der Erfindung, insbesondere zumindest ausgehend von dem dritten Erfindungsaspekt, ragt der Gitterabschnitt des Gitterelements entgegen der Aufnahmerichtung nach innen, insbesondere in einen Aufnahmeraum der Aufnahmeeinrichtung hinein. Alternativ oder zusätzlich kann der Gitterabschnitt des Gitterelements entgegen der Aufnahmerichtung nach innen, insbesondere in den Aufnahmeraum der Aufnahmeeinrichtung hinein, versetzt angeordnet sein. Der Aufnahmeraum ist insbesondere komplementär zu dem Batteriepack ausgebildet. Insbesondere kann der Gitterabschnitt bezüglich der unterseitigen Bodenfläche zurückversetzt sein.

Zweckmäßig kann unter Umständen eine entgegen der Aufnahmerichtung weisende Kontur des Gitterelements, insbesondere komplementär, auf den aufzunehmenden Batteriepack abgestimmt sein. Alternativ oder zusätzlich kann das Gitterelement für den aufgenommenen Batteriepack einen Anschlag in Aufnahmerichtung ausbilden.

In weiterer Ausgestaltung der Erfindung, insbesondere zumindest ausgehend von dem dritten Erfindungsaspekt, beträgt - mit Blick senkrecht zu der Aufstellebene und/oder in Aufnahmerichtung - ein kumulierter Flächeninhalt durchlässiger Gitteröffnungsquerschnittsflächen des Gitterelements minimal 10 % und/oder maximal 80 % eines Flächeninhalts einer Aufnahmeraumquerschnittsfläche der Aufnahmeeinrichtung. Die Aufnahmeraumquerschnittsfläche kann - mit Blick in Aufnahmerichtung - einer von einer Silhouette des aufgenommenen Batteriepacks einbeschriebenen Fläche und/oder einer Aufnahmeöffnungsquerschnittsfläche der Aufnahmeöffnung entsprechen. Insbesondere kann der kumulierte Flächeninhalt durchlässiger Gitteröffnungsquerschnittsflächen 20 % bis 60 %, beispielsweise in etwa 25 %, der Aufnahmeraumquerschnittsfläche entsprechen.

Zweckmäßig kann das Bearbeitungsgerät wenigstens eine Gleitrippe aufweisen, die an der unterseitigen Bodenfläche des Bearbeitungsgeräts verläuft. Dabei kann wenigstens ein Gitterlängsstab des Gitterelements zumindest eine derartige Gleitrippe, insbesondere fluchtend, verlängern. Wenigstens ein Gitterlängsstab kann unterseitig die Funktion einer Gleitrippe erfüllen und/oder ergänzen. Es versteht sich, dass wenigstens ein Gitterlängsstab alternativ oder zusätzlich entlang der Breitenrichtung versetzt zu wenigstens einer Gleitrippe angeordnet sein kann.

In weiterer Ausgestaltung der Erfindung, insbesondere zumindest ausgehend von dem dritten Erfindungsaspekt, ist der Gitterabschnitt des Gitterelements senkrecht zu der Längserstreckungsrichtung des Bearbeitungsgeräts über eine Gitterabschnittsbreite erstreckt. Dabei beträgt die Gitterabschnittsbreite minimal 25 % und/oder maximal 75 % einer zu der Gitterabschnittsbreite parallel gemessenen Gesamtelementbreite des Gitterelements. Die Gesamtelementbreite kann insbesondere an dem Rahmenabschnitt des Gitterelements außenseitig gemessen sein. Die Gitterabschnittsbreite kann insbesondere an dem Rahmenabschnitt des Gitterelements innenseitig gemessen sein.

In weiterer Ausgestaltung der Erfindung, insbesondere zumindest ausgehend von dem dritten Erfindungsaspekt, weist das Gitterelement ein Polymermaterial auf oder besteht aus einem solchen Polymermaterial. Das Polymermaterial kann ein Polyamid (PA) aufweisen oder sein. Insbesondere kann es sich bei dem Polymermaterial um PA66-GF30 oder um PA6 GF15-I handeln.

In weiterer Ausgestaltung der Erfindung, insbesondere zumindest ausgehend von dem dritten Erfindungsaspekt, ist das Bearbeitungsgerät als Motorsäge, insbesondere als Motorkettensäge, oder als Blasgerät oder als Trennschleifer oder als Heckenschere ausgebildet.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.
- Fig. 1: zeigt in schematischer Seitenansicht stilisiert eine Ausführungsform eines erfindungsgemäßen handgeführten Bearbeitungsgeräts,
- Fig. 2: zeigt in schematischer Seitenansicht ein Detail einer weiteren Ausführungsform des erfindungsgemäßen Bearbeitungsgeräts,
- Fig. 3: zeigt in schematischer Rückansicht ein Detail einer weiteren Ausführungsform des erfindungsgemäßen Bearbeitungsgeräts,
- Fig. 4: zeigt in schematischer Seitenansicht ein Detail einer weiteren Ausführungsform des erfindungsgemäßen Bearbeitungsgeräts,
- Fig. 5: zeigt in schematischer Draufsicht ein Detail einer weiteren Ausführungsform des erfindungsgemäßen Bearbeitungsgeräts,
- Fig. 6: zeigt in schematischer Perspektivdarstellung ein Detail einer weiteren Ausführungsform des erfindungsgemäßen Bearbeitungsgeräts,
- Fig. 7: zeigt in weiterer schematischer Perspektivdarstellung ein Detail einer weiteren Ausführungsform des erfindungsgemäßen Bearbeitungsgeräts,
- Fig. 8: zeigt in schematischer Perspektivdarstellung eine weitere Ausführungsform des erfindungsgemäßen Bearbeitungsgeräts,
- Fig. 9: zeigt in schematischer Perspektivdarstellung ein Detail einer weiteren Ausführungsform des erfindungsgemäßen handgeführten Bearbeitungsgeräts,
- Fig. 10: zeigt in schematischer Schnittdarstellung ein Detail einer weitere Ausführungsform des erfindungsgemäßen handgeführten Bearbeitungsgeräts,
- Fig. 11: zeigt in schematischer Untersicht ein Detail einer weiteren Ausführungsform des erfindungsgemäßen Bearbeitungsgeräts,
- Fig. 12: zeigt in schematischer Draufsicht ein Detail einer weiteren Ausführungsform des erfindungsgemäßen handgeführten Bearbeitungsgeräts,
- Fig. 13: zeigt in schematischer Perspektivdarstellung ein Gitterelement für eine weitere Ausführungsform des erfindungsgemäßen Bearbeitungsgeräts,
- Fig. 14: zeigt in einer weiteren schematischen Perspektivdarstellung das Gitterelement nach Fig. 13,
- Fig. 15: zeigt in perspektivischer Detaildarstellung eine weitere Ausführungsform des erfindungsgemäßen Bearbeitungsgeräts, und
- Fig. 16: zeigt in einer weiteren perspektivischen Detaildarstellung geschnitten das Bearbeitungsgerät nach Fig. 15.

Ein handgeführtes Bearbeitungsgerät 100 weist eine Aufnahmeeinrichtung 49 auf. Die Aufnahmeeinrichtung 49 ist zum auswechselbaren Ankoppeln eines elektrischen Batteriepacks 200 in einer Aufnahmerichtung 60 ausgebildet. Der Begriff "Ankoppeln" kann synonym zu dem Begriff "aufnehmen" verstanden werden. Der angekoppelte bzw. aufgenommene Batteriepack 200 kann entgegen der Aufnahmerichtung 60 von der Aufnahmeeinrichtung 49 wieder entfernt werden. Der Batteriepack 200 kann ein elektrischer Akkupack sein.

Die Aufnahmeeinrichtung 49 weist einen Aufnahmeraum 74 für den Batteriepack 200 auf. Der Aufnahmeraum 74 kann einem Schachtinnenraum eines Batterieschachts der Aufnahmeeinrichtung 49 entsprechen.

Das Bearbeitungsgerät 100 ist vorliegend entlang einer Längserstreckungsrichtung 11 längserstreckt. Eine Breitenrichtung 81 des Bearbeitungsgeräts 1000 verläuft vorliegend senkrecht zu der Aufnahmerichtung 60 und senkrecht zu der Längserstreckungsrichtung 11.

Die Aufnahmeeinrichtung 49 weist vorliegend eine Aufnahmeöffnung 61 auf, die zum Hineinführen des aufzunehmenden Batteriepacks 200 ausgebildet ist. Je nach Länge des Batteriepacks 200 kann der Batteriepack 200 in seinem aufgenommenen Zustand die Aufnahmeöffnung 61 durchragen oder im Wesentlichen vollständig in dem Aufnahmeraum 74 angeordnet sein.

Das Bearbeitungsgerät 100 weist beispielsweise eine elektrische Antriebseinrichtung auf, die zum Bereitstellen von Antriebsleistung basierend auf dem aufgenommenen Batteriepack 200 entnommener elektrischer Energie ausgebildet ist. Das Bearbeitungsgerät 100 weist beispielsweise eine Werkzeuganbringungseinrichtung auf, an welcher eine Werkzeugeinrichtung montierbar ist. Mittels der elektrischen Antriebseinrichtung kann Antriebsleistung für die Werkzeugeinrichtung bereitgestellt werden.

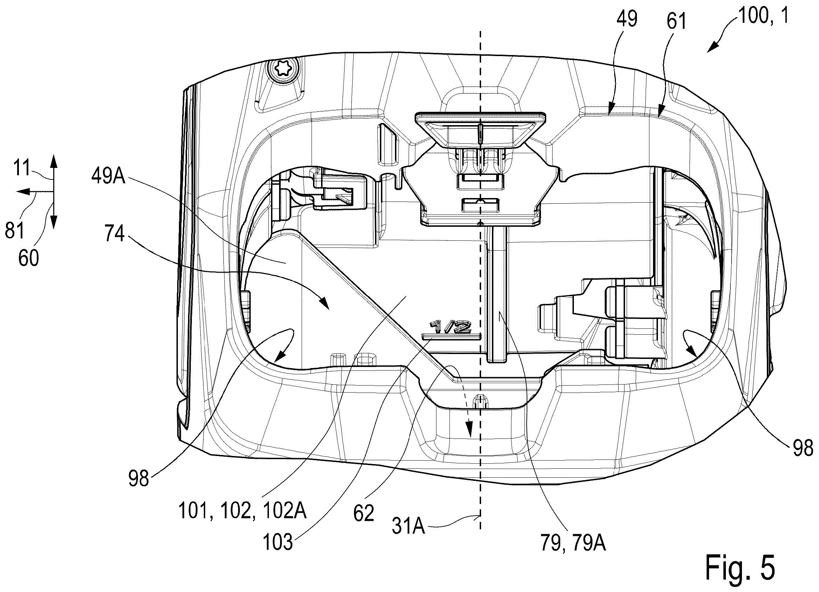

Das Bearbeitungsgerät 100 hat vorliegend einen Schmiermitteltank 101, der zum Bevorraten von Schmiermittel, insbesondere für die Werkzeugeinrichtung, dient. Das Bearbeitungsgerät 100 weist vorliegend eine Füllstandanzeigeeinrichtung 102A auf, die zum Anzeigen eines Füllstands an in dem Schmiermitteltank 101 bevorratetem Schmiermittel ausgebildet ist. Dabei ist die Füllstandanzeigeeinrichtung 102A vorliegend derart angeordnet, dass der angezeigte Füllstand bei nicht-aufgenommenem Batteriepack 200 von außen durch die Aufnahmeöffnung 61 hindurchblickend ablesbar ist, vgl. insbesondere die Darstellung der Fig. 5.

Das Bearbeitungsgerät 100 kann zumindest eine Sichtöffnung 80 aufweisen, die den Aufnahmeraum 74 nach außen öffnet und durch welche von außen her hindurchblickend der mittels der Anzeigeeinrichtung 102A angezeigte Füllstand bei nicht-aufgenommenem Batteriepack 200 ablesbar ist.

Die Aufnahmeeinrichtung 49 des Bearbeitungsgeräts 100 weist eine bezüglich der Längserstreckungsrichtung 11 vordere Aufnahmeeinrichtungsseite 79A auf. Die vordere Aufnahmeeinrichtungsseite 79A kann einen vorderen Führungsflächenabschnitt 79 zum Führen des Batteriepacks 200 entlang der Aufnahmerichtung 60 ausbilden oder parallel zu dem vorderen Führungsflächenabschnitt 79 verlaufen. Die vordere Aufnahmeeinrichtungsseite 79A definiert den Aufnahmeraum 74, insbesondere senkrecht zu der Aufnahmerichtung 60 und/oder in Längserstreckungsrichtung 11.

Das Bearbeitungsgerät 100 weist vorliegend zwei Sichtöffnungen 80 auf. Es können genau zwei Sichtöffnungen 80 vorhanden sein - oder gegebenenfalls auch mehr als zwei Sichtöffnungen 80. Die beiden Sichtöffnungen 80 sind der vorderen Aufnahmeeinrichtungsseite 79A gegenüberliegend angeordnet. Dabei öffnen die Sichtöffnungen 80 den Aufnahmeraum 74 jeweils entgegen der Längserstreckungsrichtung 11 nach außen.

Mittels der Sichtöffnungen 80 kann der Aufnahmeraum 74 entgegen der Längserstreckungsrichtung 11 mit einer äußeren Umgebung des Bearbeitungsgeräts 100 fluidleitend kommunizieren. Unter Umständen kann es alternativ denkbar sein, die Sichtöffnungen 80 mittels einer transparenten Scheibe zwar fluidundurchlässig, aber blickdurchlässig zu verschließen.

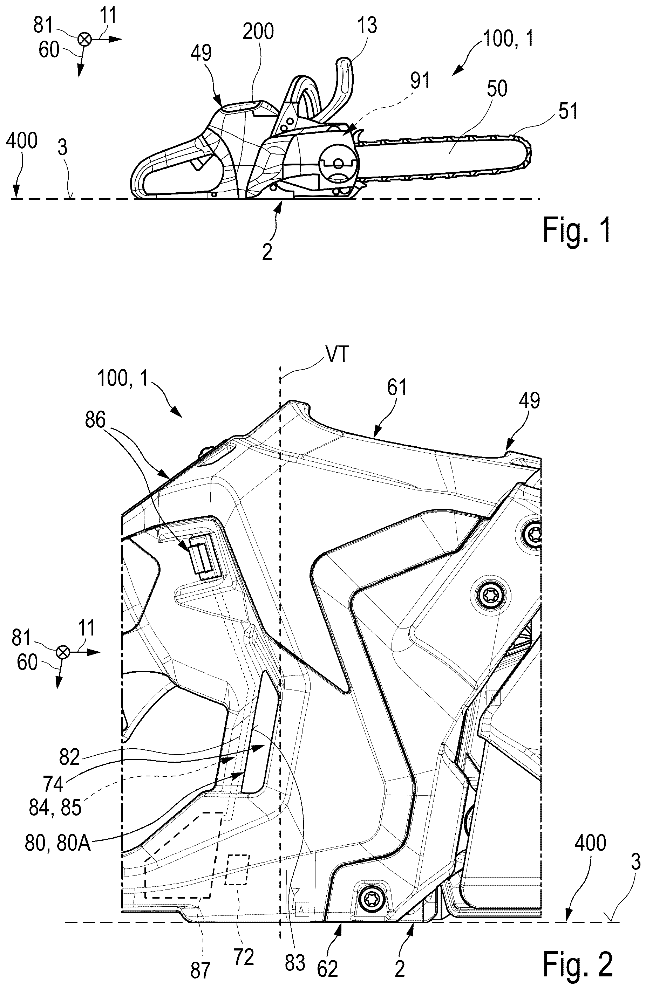

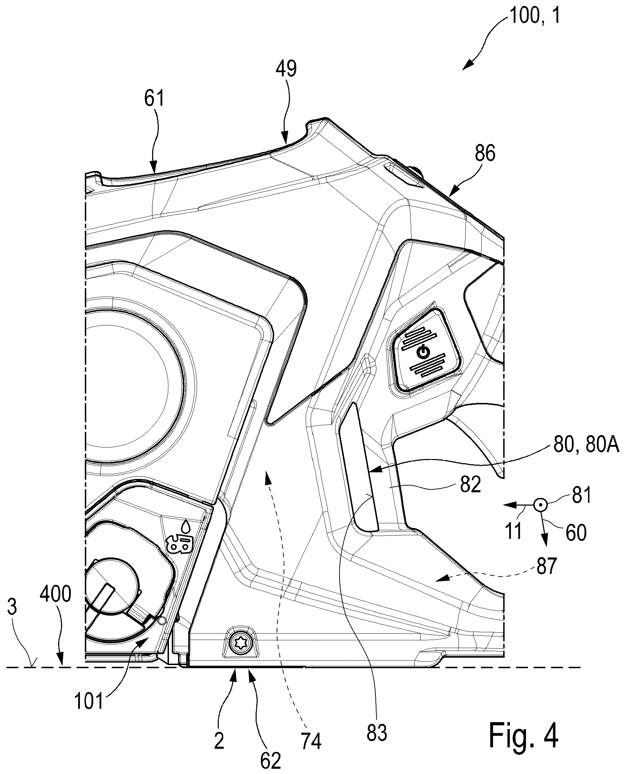

Die beiden Sichtöffnungen 80 sind vorliegend relativ zueinander derart angeordnet, dass sie in Breitenrichtung 81 betrachtet - bei nicht aufgenommenem Batteriepack 200 - blickdurchlässig miteinander fluchten, vgl. insbesondere die Darstellungen der Fig. 2 und 4.

An dem Batteriepack 200 kann eine Beschriftung vorhanden sein, die in einem aufgenommenen Zustand des Batteriepacks 200 durch zumindest eine der Sichtöffnungen 80 hindurch gelesen werden kann.

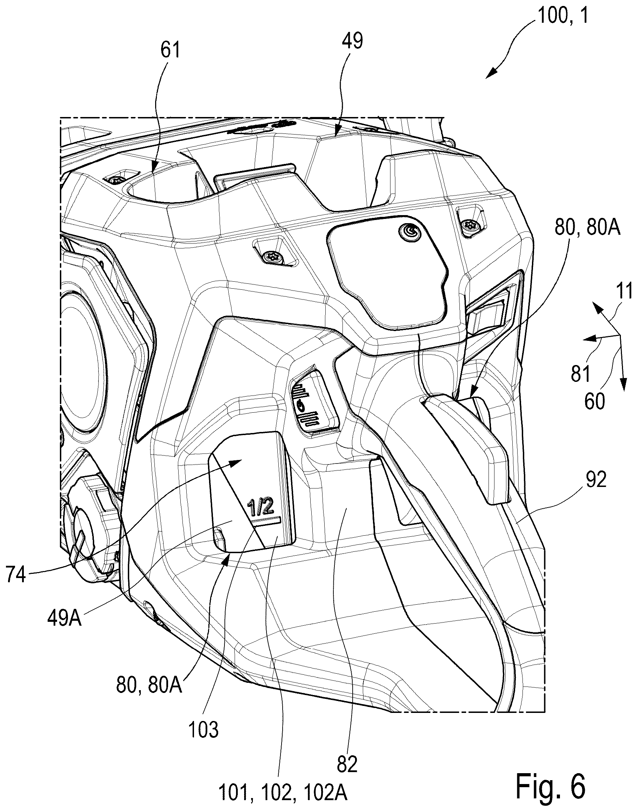

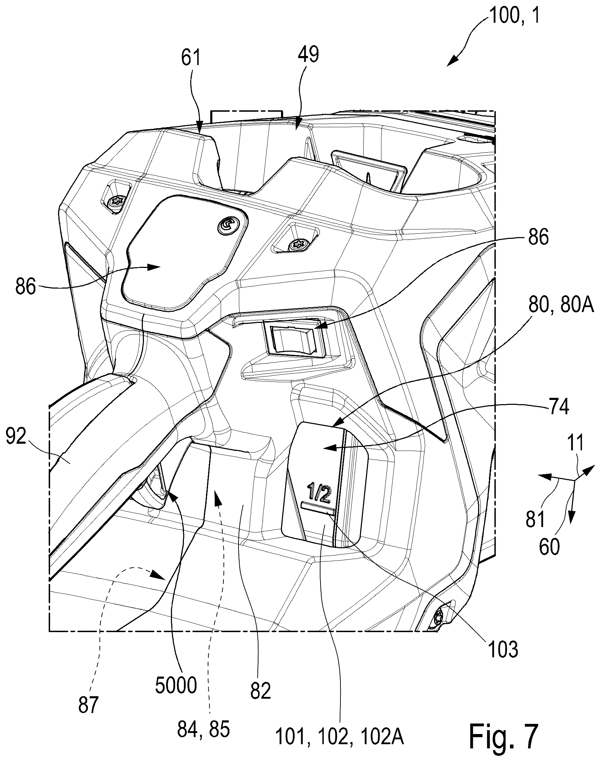

Vorliegend ist die Füllstandanzeigeeinrichtung 102A derart angeordnet, dass der angezeigte Füllstand bei nicht-aufgenommenem Batteriepack 200 von außen her durch eine jeweilige der beiden Sichtöffnungen 80 blickend ablesbar ist, vgl. insbesondere die Darstellung der Fig. 6 und 7. Die Füllstandanzeigeeinrichtung 102A kann die vordere Aufnahmeeinrichtungsseite 79A - wie vorliegend - zumindest teilweise ausbilden.

Beispielsweise weist der Schmiermitteltank 101 zumindest einen transparenten Tankwandabschnitt 102 auf. Beispielswiese bildet der transparente Tankwandabschnitt 102 die Füllstandanzeigeeinrichtung 102A zumindest teilweise aus. Ein im Innenraum des Schmiermitteltanks 101 vorhandener Pegel an Schmiermittel kann sich außenseitig an dem transparenten Tankwandabschnitt 102 abzeichnen, um an dem Schmiermitteltank 101 außenseitig durch die Aufnahmeöffnung 61 und/oder durch die Sichtöffnungen 80 hindurch abgelesen werden zu können.

Das Bearbeitungsgerät 100 weist beispielsweise eine Aufstelleinrichtung 2 auf, die eine Aufstellebene 3, insbesondere des Bearbeitungsgeräts 100, definiert. Dabei ist die Aufstelleinrichtung 2 zum Berühren eines Untergrunds 400, auf welchem das Bearbeitungsgerät 100 aufstellbar ist, in der Aufstellebene 3 ausgebildet. Wenn das Bearbeitungsgerät 100 auf dem Untergrund 400 aufgestellt wird, könnten Kontaktpunkte zwischen der Aufstelleinrichtung 2 und dem Untergrund 400 in der Aufstellebene 3 liegen.

Die Aufnahmerichtung 60 verläuft vorliegend winkelig, beispielsweise rechtwinkelig, oder - wie vorliegend - spitzwinkelig, zu der Aufstellebene 3. Die Aufnahmerichtung 60 kann in einer alternativen Ausführungsform auch parallel zu der Aufstellebene 3 verlaufen, beispielsweise entlang der Breitenrichtung 81.

Die Aufnahmeöffnung 61 liegt der Aufstelleinrichtung 2 des Bearbeitungsgeräts 100 vorliegend entlang der Aufnahmerichtung 60 gegenüber. Alternativ oder zusätzlich kann - wie vorliegend - die Füllstandanzeigeeinrichtung 102A, beispielsweise zur Optimierung eines Ableseblickwinkels, relativ zu der Aufstellebene 3 geneigt sein.

Die Füllstandanzeigeeinrichtung 102A weist vorliegend eine Markierung 103 als Ablesereferenz für den Füllstand auf. Dabei ist die Markierung 103 bei nicht-aufgenommenem Batteriepack 200 von außen her durch die Aufnahmeöffnung 61 und/oder durch die Sichtöffnungen 80 hindurchblickend sichtbar. Insbesondere können auch mehrere Markierungen 103 als Ablesereferenz für den Füllstand des Schmiermitteltanks 101, insbesondere für zumindest einen oder mehrere Füllstandwerte, vorgesehen sein.

Die Aufnahmeeinrichtung 49 weist beispielsweise einen Wandabschnitt 49A auf. Der Wandabschnitt 49A kann den Schmiermitteltank 101, insbesondere den transparenten Tankwandabschnitt 102 des Schmiermitteltanks 101, teilweise verdecken. Beispielsweise verläuft der Wandabschnitt 49A im Wesentlichen in einer durch die Aufnahmerichtung 60 und durch die Breitenrichtung 81 aufgespannten Ebene, wobei der Wandabschnitt 49 eine in der Ebene verlaufende obere Kante hat, die relativ zu der Breitenrichtung 81 spitzwinkelig angestellt verläuft. Der Wandabschnitt 49 kann opak sein.

Vorliegend verläuft bezüglich der Breitenrichtung 81 zwischen den Sichtöffnungen 80 ein Stegabschnitt 82 des Bearbeitungsgeräts 100. Der Stegabschnitt 82 kann entlang der Aufnahmerichtung 60 durchgängig längserstreckt sein. Die Sichtöffnungen 80 flankieren vorliegend den Stegabschnitt 82 bezüglich der Breitenrichtung 81.

Der Stegabschnitt 82 bildet vorliegend einen bezüglich der Längserstreckungsrichtung 11 hinteren Führungsflächenabschnitt 83 des Bearbeitungsgeräts 100 zum Führen des Batteriepacks 200 entlang der Aufnahmerichtung 60 zumindest teilweise aus.

Beispielsweise weist der Stegabschnitt 82 einen Leitungskanal 84 zum Führen zumindest einer elektrischen Leitung 85 auf. Vorliegend sind elektrische Leitungen 85 durch den Leitungskanal 84 hindurchgeführt.

Das Bearbeitungsgerät 100 weist beispielsweise eine benutzerbedienbare Bedieneinrichtung 86 auf. Zudem hat das Bearbeitungsgerät 100 vorliegend eine elektronische Steuerungseinrichtung 87, die mittels der elektrischen Leitungen 85 entlang der Aufnahmerichtung 60 mit der Bedieneinrichtung 86 verbunden ist.

Das Bearbeitungsgerät 100 kann, insbesondere zusätzlich zu der Steuerungseinrichtung 87, eine weitere, insbesondere elektronische, Steuerungseinheit 91 aufweisen. Beispielsweise kann die Steuerungseinheit 91 eine Hauptsteuerungseinheit des Bearbeitungsgeräts 100 zum Steuern der Antriebseinrichtung sein. Die Steuerungseinheit 91 kann entlang der Längserstreckungsrichtung 11 zwischen der Antriebseinrichtung und einem werkzeugzugewandten Ende des Bearbeitungsgeräts 100 angeordnet sein. Die Steuerungseinrichtung 87 kann der Steuerungseinheit 91 untergeordnet sein. Beispielsweise kann die Steuerungseinrichtung 87 mittels der Steuerungseinheit 91, insbesondere gesteuert, mit elektrischer Spannung versorgt werden. Die Die Steuerungseinrichtung 87 kann der Steuerung einer Nebenfunktionseinrichtung, wie beispielsweise einer Griffheizung des Bearbeitungsgeräts 100, dienen.

Der Stegabschnitt 82 weist beispielsweise eine parallel zu der Breitenrichtung 81 gemessene Stegbreite 88 auf. Der Aufnahmeraum 74 hat beispielsweise eine parallel zu der Breitenrichtung 81 gemessene, insbesondere innere, Aufnahmeraumbreite 89. Dabei kann die Aufnahmeraumbreite 89 einem 1,5-Fachen bis 6-Fachen der Stegbreite 88 entsprechen. Vorliegend entspricht die Aufnahmeraumbreite 89 in etwa einem 3-Fachen der Stegbreite 88.

Der Aufnahmeraum 74 weist vorliegend ein der Aufstellebene 3 zugewandtes Ende, insbesondere Stirnende, auf. Dabei kann sich die Steuerungseinrichtung 87 - wie vorliegend - im Bereich dieses Endes des Aufnahmeraums 74 entgegen der Längserstreckungsrichtung 11 an die Aufnahmeeinrichtung 49 anschließen. Die Steuerungseinrichtung 87 kann sich also bezüglich der Längserstreckungsrichtung 11 hinten in dem Bereich des der Aufstellebene 3 zugewandten Endes des Aufnahmeraums 74 an die Aufnahmeeinrichtung 49 anschließen.

Wie insbesondere die Darstellungen der Fig. 2, 3, 4, 6 und 7 erkennen lassen, kann ein Gehäuse des Bearbeitungsgeräts 100 eine außenseitige Ausbeulung aufweisen, die sich in dem Bereich des der Aufstellebene 3 zugewandten Endes des Aufnahmeraums 74 entgegen der Längserstreckungsrichtung 11 an die Aufnahmeeinrichtung 49 anschließt. Im Inneren dieser Ausbeulung kann ein Hohlraum vorhanden sein, innerhalb dessen die Steuerungseinrichtung 87 angeordnet ist. Die dort angeordnete Steuerungseinrichtung 87 kann insbesondere zur Steuerung einer Griffheizung für einen hinteren Handgriffabschnitt 92 des Bearbeitungsgeräts 100 dienen. Alternativ oder zusätzlich kann das Bearbeitungsgerät 100 zumindest eine andere Steuerungseinrichtung 87 aufweisen. Falls das Bearbeitungsgerät 100 ohne Griffheizung realisiert wird, kann der im Inneren der Ausbeulung vorhandene Hohlraum ggf. leer bleiben.

Der hintere Handgriffabschnitt 92 definiert vorliegend ein bezüglich der Längserstreckungsrichtung 11 hinteres, insbesondere werkzeugabgewandtes, Ende 94 des Bearbeitungsgeräts 100. Eine Längsmittelebene 31A des Bearbeitungsgeräts 100 ist vorliegend durch den hinteren Handgriffabschnitt 92 definiert.

Das Bearbeitungsgerät 100 weist beispielsweise elektrische Anschlusselemente 72 zum elektrischen Anschließen des aufgenommenen Batteriepacks 200 auf. Die elektrischen Anschlusselemente 72 können entlang der Aufnahmerichtung 60 zwischen den Sichtöffnungen 80 und der Aufstelleinrichtung 2 des Bearbeitungsgeräts 100 angeordnet sein. Die elektrischen Anschlusselemente 72 weisen vorliegend entgegen der Aufnahmerichtung 60 und/oder zu der Aufnahmeöffnung 61 hin.

Die Aufnahmeeinrichtung 49 weist beispielsweise eine der Aufnahmeöffnung 61 entlang der Aufnahmerichtung 60 gegenüberliegende, insbesondere vergitterte und/oder bodenseitige, Durchgangsöffnung 62 auf.

Die Sichtöffnungen 80 sind vorliegend bezüglich der Längsmittelebene 31A spiegelsymmetrisch ausgebildet und/oder angeordnet. Vorliegend sind die Sichtöffnungen 80 als bezüglich der Längsmittelebene 31A spiegelsymmetrisches Öffnungspaar ausgebildet.

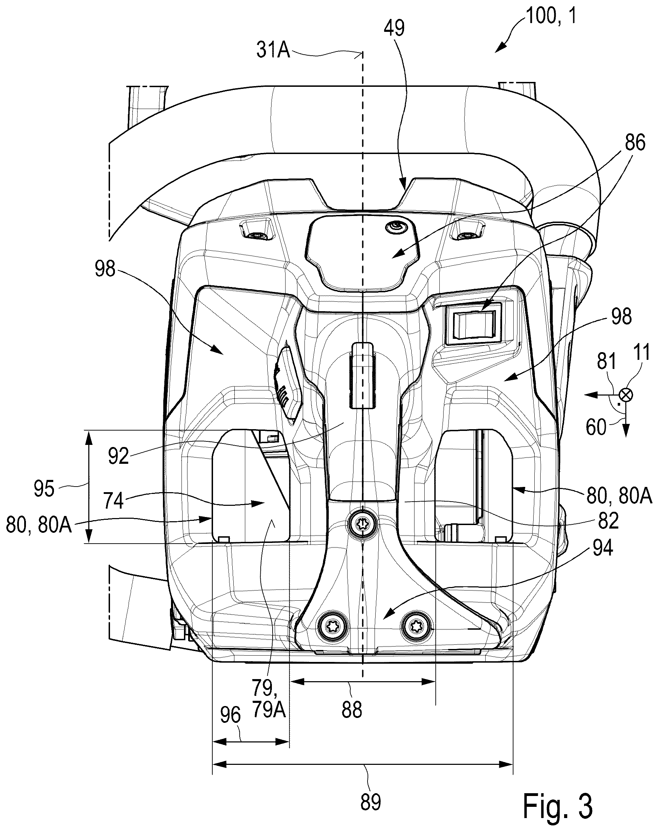

Die Sichtöffnungen 80 sind beispielsweise entlang der Aufnahmerichtung 60 länglich erstreckt. Dabei kann eine entlang der Aufnahmerichtung 60 gemessene Öffnungslänge 95 der Sichtöffnungen 80 jeweils 10 mm bis 120 mm, beispielsweise wie vorliegend jeweils zwischen 30 mm und 50 mm, betragen. Alternativ oder zusätzlich kann eine, insbesondere in einer sich bei Blick in Längserstreckungsrichtung 11 ergebenden Rückansicht des Bearbeitungsgeräts 100, senkrecht zu der Aufnahmerichtung 60 gemessene Öffnungsbreite 96 der Sichtöffnungen 80 jeweils 10 mm bis 50 mm betragen, vgl. insbesondere die Darstellung der Fig. 3.

Der, insbesondere hohle, Aufnahmeraum 74 kann eine im Wesentlichen prismatische, beispielsweise vorliegend quaderartige, Formgebung aufweisen. Vorliegend hat die, insbesondere negative, Formgebung des Aufnahmeraums 74 zumindest zwei entlang der Aufnahmerichtung 60 längserstreckte Kantenbereiche 89. Die Kantenbereiche 89 flankieren den hinteren Führungsflächenabschnitt 83, der den Aufnahmeraum 74 teilweise definiert, entlang der Breitenrichtung 81. Der hintere Führungsflächenabschnitt 83 ist also bezüglich der Breitenrichtung 81 vorliegend zwischen den beiden, insbesondere inneren, Kantenbereichen 89 vorhanden.

Beispielsweise unterbricht jeweils eine der Sichtöffnungen 80 einen der Kantenbereiche 89. Dabei kann ein jeweiliger der Kantenbereiche 89 um ein 1,5-Faches bis 15-Faches der Öffnungslänge 95 der Sichtöffnungen 80 längserstreckt sein.

**In** der Darstellung der Fig. 2 ist exemplarisch eine gedachte Gerade VT orthogonal zu der Aufstellebene 3 eingezeichnet. Der Darstellung der Fig. 2 entsprechend tangiert die Gerade VT - mit Blick in Breitenrichtung 81 - die Öffnungsränder 80A der Sichtöffnungen 80 je vorne bezüglich der Längserstreckungsrichtung 11. Dabei kann die Gerade VT - wie vorliegend - bezüglich der Längserstreckungsrichtung 11 des Bearbeitungsgeräts 100 vor den elektrischen Anschlusselementen 72 verlaufen. Es ist alternativ denkbar, dass die Gerade VT die Anschlusselemente 72 schneidet. Die elektrischen Anschlusselemente 72 können sich in einen Bodenbereich der Aufnahmeeinrichtung, insbesondere bis in den Bodenbereich der als Batterieschacht ausgebildeten Aufnahmeeinrichtung, befinden. Beispielsweise befinden sich die Anschlusselemente 72 auf der der Werkzeugeinrichtung abgewandten Seite des Batterieschachts.

Das Bearbeitungsgerät 100 ist vorliegend als Motorsäge 1, insbesondere als Motorkettensäge, ausgebildet. Die Werkzeugeinrichtung für die Motorsäge 1 kann - wie vorliegend - eine Sägeketten-Führungsschiene 50 zum umlaufenden Führen einer Sägekette 51 sein. In ihrem montierten Zustand kann die Sägeketten-Führungsschiene 50 im Wesentlichen entlang der Längserstreckungsrichtung 11 und/oder parallel zu der Längsmittelebene 31A längserstreckt sein.

Das Bearbeitungsgerät 100 kann einen Bremshebel 13 aufweisen, durch dessen Betätigung zumindest ein beweglicher Teil der Werkzeugeinrichtung abbremsbar ist. Vorliegend kann die Sägekette 51 infolge einer Betätigung des Bremshebels 13 abgebremst, insbesondere gestoppt, werden.

Das Bearbeitungsgerät 100 kann einen Betätigungshebel 5000, insbesondere Gashebel, zum Ansteuern der Antriebseinrichtung, insbesondere in Form eines Elektromotors, ganz insbesondere in Form eines bürstenlosen Elektromotors, aufweisen.

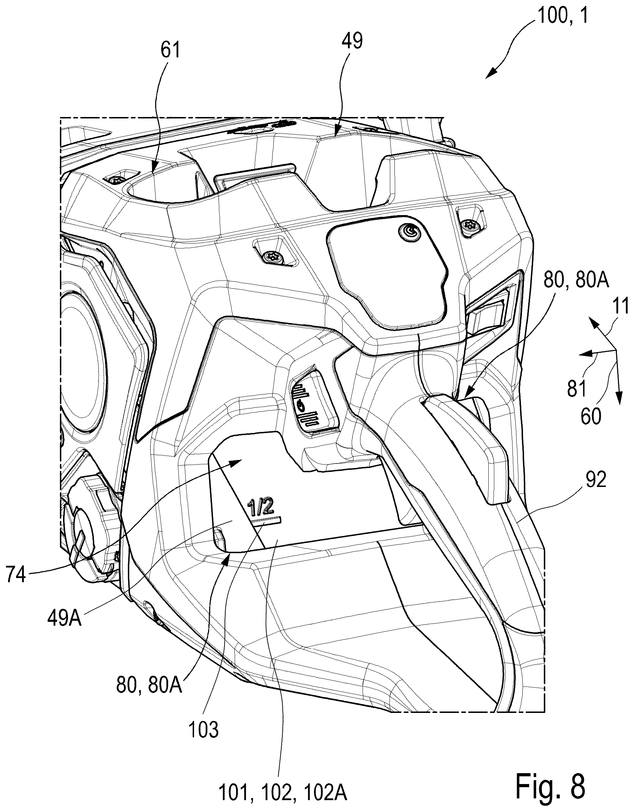

Die Darstellungen der Fig. 1 bis 8 können sich auf dieselbe Ausführungsform des handgeführten Bearbeitungsgeräts 100 beziehen. Insbesondere kann es sich bei den gezeigten Details um solche eines einzigen Bearbeitungsgeräts 100 handeln.

Das Bearbeitungsgerät 100 kann bei anderen Ausführungsformen als Trennschleifer, Freischneider, Blasgerät oder als Heckenschere ausgebildet sein.

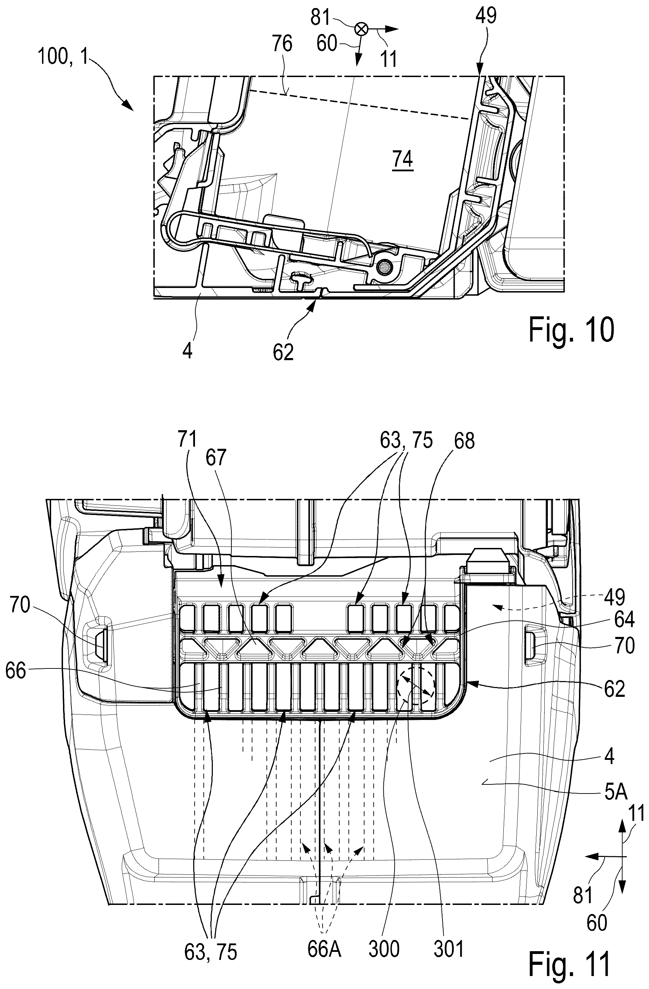

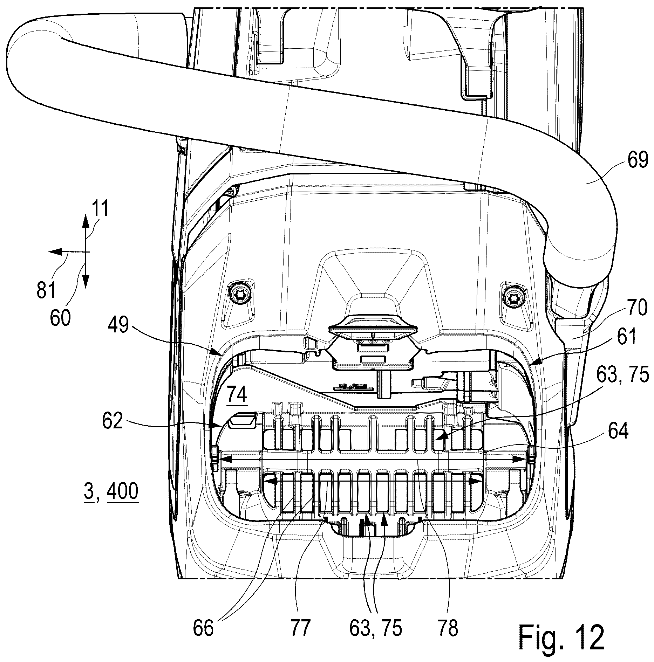

Im Folgenden werden weiter Ausführungsbespiele erläutert, insbesondere mit Bezug auf die Fig. 1 sowie 9 bis 14. Dabei werden einige der vorstehenden Inhalte der Beschreibung zu den Ausführungsbeispielen nochmals wiederholt, insbesondere sofern sie auch für das Verständnis der Beispiele der Fig. 1 sowie 9 bis 14 beachtlich sind. Das handgeführte Bearbeitungsgerät 100 weist eine Aufnahmeeinrichtung 49 auf. Die Aufnahmeeinrichtung 49 ist zum auswechselbaren Aufnehmen eines elektrischen Batteriepacks 200 ausgebildet. Die Aufnahmeeinrichtung 49 ist dazu ausgebildet, den Batteriepack 200 in einer Aufnahmerichtung 60 aufzunehmen. Der aufzunehmende Batteriepack 200 kann entgegen der Aufnahmerichtung 60 wieder von der Aufnahmeeinrichtung 49 entfernt werden.

Die Aufnahmeeinrichtung 49 weist eine Aufnahmeöffnung 61 auf, die zum Hineinführen des aufzunehmenden Batteriepacks 200 ausgebildet ist. Insbesondere ist der Batteriepack 200 durch die Aufnahmeöffnung 61 in einen Aufnahmeraum 74 der Aufnahmeeinrichtung 49 hinein einführbar. In dem aufgenommenen Zustand des Batteriepacks 200 kann der Aufnahmeraum 74 von einem Steckabschnitt des Batteriepacks 200 im Wesentlichen ausgefüllt sein. Es versteht sich, dass die Aufnahmeöffnung 61 vorliegend auch zum wieder Hinausführen des aufgenommenen Batteriepacks 200 dient.

Der Aufnahmeraum 74 kann eine im Wesentlichen prismatische, insbesondere im Wesentlichen quaderförmige, Formgebung aufweisen. Der Batteriepack 200 kann, insbesondere zumindest in seinem Steckabschnitt, eine äußere Formgebung haben, die im Wesentlichen komplementär zu der Formgebung des Aufnahmeraums 74 ausgebildet ist.

Die Aufnahmeeinrichtung 49 weist eine, insbesondere unterseitige, Durchgangsöffnung 62 zum Hinauslassen von Schmutz auf. Die Durchgangsöffnung 62 liegt der Aufnahmeöffnung 61 entgegen. Beispielsweise liegt die Durchgangsöffnung 62 der Aufnahmeöffnung 61 entlang der Aufnahmerichtung 60 gegenüber.

Das Bearbeitungsgerät 100 weist ein Gitterelement 64 auf, welches wenigstens drei, vorliegend mehr als drei, Gitteröffnungen 63 hat. Das Gitterelement 64 ist zum schmutzdurchlässigen Vergittern der Durchgangsöffnung 62 ausgebildet und vorliegend angeordnet.

Beispielsweise ist das Gitterelement 64 für einen Prüfkörper 300 undurchlässig. Beispielsweise ist das Gitterelement 64 für einen Prüfkörper 300 mit einem Außendurchmesser 301 von 2 mm bis 50 mm, insbesondere von minimal 8 mm und/oder maximal 20 mm, undurchlässig. Vorliegend ist das Gitterelement 64 für einen Prüfkörper 300 mit Außendurchmesser 301 von 12 mm undurchlässig. Die Gitteröffnungen 63 können derart verengt sein, dass der Prüfkörper 300 durch keine der Gitteröffnungen 63, insbesondere entlang der Aufnahmerichtung 60, hindurchtreten kann. Anhand des Außendurchmessers 301 des Prüfkörpers 300 kann die Durchlässigkeit des Gitterelements 64 beschrieben und/oder angegeben werden, insbesondere ähnlich einer Öffnungs- bzw. Maschenweite.

Das Bearbeitungsgerät 100 weist vorliegend eine Aufstelleinrichtung 2 auf. Die Aufstelleinrichtung 2 kann Standfüße und/oder Standrippen aufweisen. Die Aufstelleinrichtung 2 definiert eine Aufstellebene 3. Dabei ist die Aufstelleinrichtung 2 zum Berühren eines Untergrunds 400 in der Aufstellebene 3 ausgebildet. Insbesondere berührt die Aufstelleinrichtung 2 den Untergrund 400, wenn das Bearbeitungsgerät 100 auf dem Untergrund 400 aufgestellt ist.

Die Aufnahmerichtung 60 verläuft vorliegend winklig zu der Aufstellebene 3. Die Aufnahmerichtung 60 kann rechtwinklig oder - wie vorliegend - spitzwinklig zu der Aufstellebene 3 verlaufen. Vorliegend schließen die Aufnahmerichtung 60 und die Aufstellebene 3 einen spitzen Winkel ein, der sich entgegen einer Längserstreckungsrichtung 11 des Bearbeitungsgeräts 100 nach hinten unten aufweitet. Der Batteriepack 200 kann insofern von vorne oben her von der Aufnahmeeinrichtung 49 aufgenommen werden.

Das Gitterelement 64 hat beispielsweise einen Gitterabschnitt 65. Der Gitterabschnitt 65 weist beispielsweise wenigstens einen Gitterlängsstab 66 auf, der vorliegend entlang der Längserstreckungsrichtung 11 des Bearbeitungsgeräts 100 verläuft. Der wenigstens eine Gitterlängsstab 66 trennt zwei der Gitteröffnungen 63 des Gitterelements 64 voneinander. Vorliegend sind mehrere im Wesentlichen parallel zueinander erstreckte Gitterlängsstäbe 66 vorhanden.

Der Gitterabschnitt 65 des Gitterelements 64 weist vorliegend einen Gitterquerstab 67 auf. Der Gitterquerstab 67 kreuzt den wenigstens einen Gitterlängsstab 66, vorliegend alle Gitterlängsstäbe 66, des Gitterelements 64. Vorliegend sind die Gitterlängsstäbe 66 und der Gitterquerstab 67 an ihren Kreuzungsstellen integral miteinander verbunden. Der Gitterquerstab 67 definiert zumindest eine der Gitteröffnungen 63, vorliegend mehrere der Gitteröffnungen 63, des Gitterelements 64 teilweise. Der Gitterquerstab 67 kann wie vorliegend relativ zu den Gitterlängsstäben 66 verdickt ausgebildet sein.

Das Bearbeitungsgerät 100 weist eine Breitenrichtung 81 auf, die senkrecht zu der Längserstreckungsrichtung 11 und parallel zu der Aufstellebene 3 verläuft. Der Gitterquerstab 67 ist vorliegend entlang der Breitenrichtung 81 längserstreckt.

Beispielsweise weist der Gitterquerstab 67 eine integrale Fachwerkstruktur 68 auf. Vorliegend ist die Fachwerkstruktur 68 unterseitig ausgebildet. Die Fachwerkstruktur 68 kann zu dem Aufnahmeraum 74 hin integral abgedeckt sein.

Das Gitterelement 64 hat vorliegend einen Rahmenabschnitt 71. Der Rahmenabschnitt 71 ist beispielsweise ohne Gitteröffnungen 63 ausgebildet. Der Rahmenabschnitt 71 säumt den Gitterabschnitt 65 des Gitterelements 64. Vorliegend sind der Gitterabschnitt 64 und der Rahmenabschnitt 71 integral ausgebildet. Das Gitterelement 64 kann monolithisch ausgebildet sein.

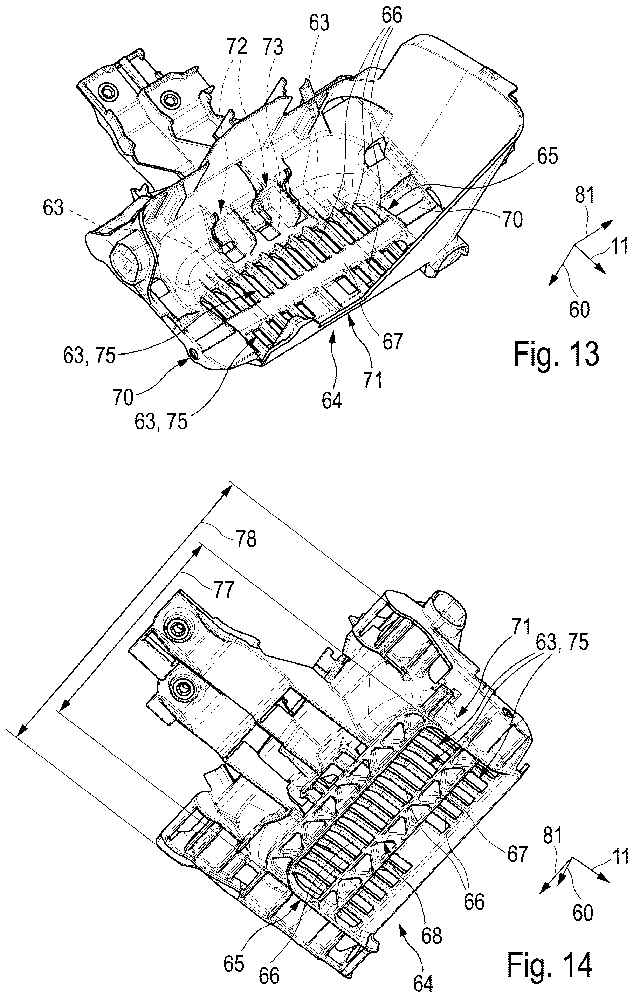

Das Bearbeitungsgerät 100 weist beispielsweise elektrische Anschlusselemente 72 auf, die zum elektrischen Anschließen des aufgenommenen Batteriepacks 200 ausgebildet sind. Vorliegend trägt das Gitterelement 64 die Anschlusselemente 72 derart, dass die Anschlusselemente 72 entgegen der Aufnahmerichtung 60 und/oder zu der Aufnahmeöffnung 61 hinweisen. In der Darstellung der Fig. 13 ist die Position der Anschlusselemente 72 beispielhaft verdeutlicht.

Das Gitterelement 64 weist beispielsweise einen Zungenabschnitt 73 auf, wobei die Anschlusselemente 72 an dem Zungenabschnitt 73 angebracht sind. Vorliegend ist der Zungenabschnitt 73 von dem Rahmenabschnitt 71 des Gitterelements 64, insbesondere integral, aufgewiesen. Der Zungenabschnitt 73 ist beispielsweise senkrecht zu der Aufnahmerichtung 60 und/oder entlang der Breitenrichtung 81 von zwei der Gitteröffnungen 63 des Gitterelements 64 flankiert, wie insbesondere in der Darstellung der Fig. 13 gestrichelt angedeutet.

Das Gitterelement 64 kann zumindest oder - wie vorliegend - nur bereichsweise bündig mit einer unterseitigen und/oder im Wesentlichen parallel zu der Aufstellebene 3 verlaufenden Bodenfläche 5A eines Gehäuses 4 des Bearbeitungsgeräts 100 abschließen. Alternativ oder zusätzlich kann ein Gitterabschnitt 65 des Gitterelements 64 entgegen der Aufnahmerichtung 60 nach innen zu dem Aufnahmeraum 74 hin versetzt angeordnet sein.

Der Gitterabschnitt 65 des Gitterelements 64 kann entgegen der Aufnahmerichtung 60 nach innen in den Aufnahmeraum 74 der Aufnahmeeinrichtung 49 hineinragen.

Die Gitteröffnungen 63 des Gitterelements 64 weisen vorliegend - senkrecht zu der Aufstellebene 3 betrachtet - jeweils eine Gitteröffnungsquerschnittsfläche 75 auf. In Aufnahmerichtung 60 betrachtet weist der Aufnahmeraum 74 eine Aufnahmeraumquerschnittsfläche 76 auf. Dabei definieren durchlässige Gitterquerschnittsöffnungsflächen 75 vorliegend gemeinsam einen kumulierten Flächeninhalt, welcher beispielsweise mindestens 10 % und/oder maximal 80 % eines Flächeninhalts der Aufnahmeraumquerschnittsfläche 76 beträgt.

An der unterseitigen Bodenfläche 5A des Bearbeitungsgeräts 100 können, insbesondere integrale, Gleitrippen 66A verlaufen. Die Gleitrippen 66A können entlang der Längserstreckungsrichtung 11 längserstreckt sein. Wenigstens ein Gitterlängsstab 66 des Gitterelements 64 kann dabei zumindest eine der Gleitrippen 66A, insbesondere fluchtend, verlängern.

Der Gitterabschnitt 65 des Gitterelements 64 ist vorliegend senkrecht zu der Längserstreckungsrichtung 11 des Bearbeitungsgeräts 100 über eine Gitterabschnittsbreite 77 erstreckt. Insbesondere ist der Gitterabschnitt 65 entlang der Breitenrichtung 81 des Bearbeitungsgeräts 100 über die Gitterabschnittsbreite 77 erstreckt. Das Gitterelement 64 ist vorliegend über eine Gesamtelementbreite 78 erstreckt, wobei die Gesamtelementbreite 78 parallel zu der Gitterabschnittsbreite 77 zu messen ist. Die Gitterabschnittsbreite 77 beträgt beispielsweise mindestens 25 % bis maximal 75 % der Gesamtelementbreite 78. Vorliegend entspricht die Gesamtelementbreite 78 einer Erstreckung des Gitterelements 64 entlang der Breitenrichtung 81 inklusive des Rahmenabschnitts 71, während die Gitterabschnittsbreite 77 einer Erstreckung nur des Gitterabschnitts 65 ohne Einbezug des Rahmenabschnitts 71 entspricht.

Der Rahmenabschnitt 71 kann eine Laibung der Durchgangsöffnung 62, insbesondere zargenartig, bekleiden.

Das Gitterelement 64 weist beispielsweise ein Polymermaterial auf oder besteht aus einem Polymermaterial. Das Polymermaterial kann PA66-GF30 sein. Beispielsweise besteht das Gitterelement 64 nicht aus Holz.

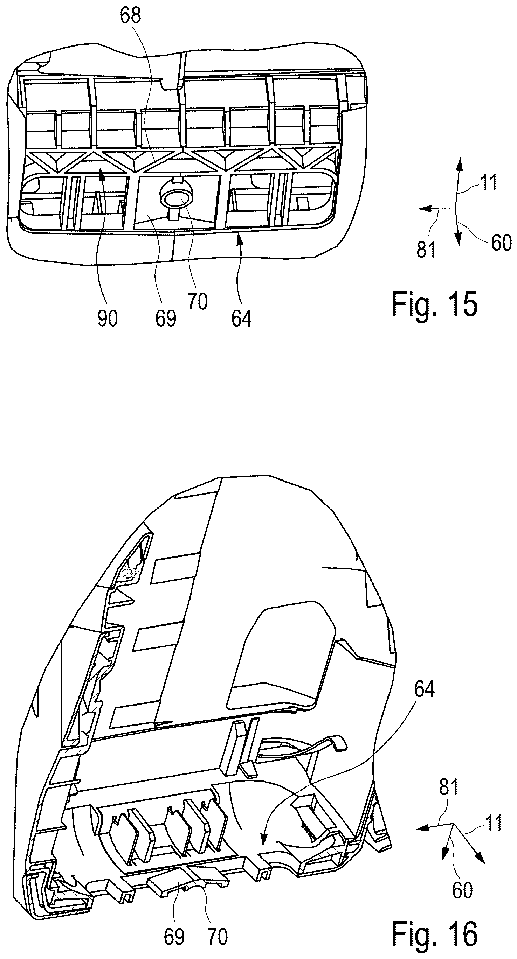

Wie insbesondere anhand der Darstellungen der Fig. 15 und 16 zu erkennen, kann das Gitterelement 64 einen, insbesondere festigkeitsrelevanten und/oder bzgl. der Breitenrichtung 81 mittig angeordneten, Verbindungssteg 69 aufweisen. Der Verbindungssteg 69 kann beispielsweise wenigstens eine entlang der Breitenrichtung 81 schräg verlaufende, insbesondere mit Blick in Aufnahmerichtung 60 nach außen schräg abfallende, Schrägfläche aufweisen. Die Schrägfläche kann einem Hinauslassen von Schmutz in Aufnahmerichtung 60 begünstigen.

Im Beispielfall der Fig. 15 und 16 ist der Verbindungssteg 69 mit zwei voneinander weggerichtet schräg nach außen verlaufende Schrägflächen ausgebildet, die in der Art der Dachflächen eines Satteldachs angeordnet sind. Es versteht sich, dass ggf. mehr als ein derartiger Verbindungssteg 69 vorgesehen sein kann. An einer den Schrägflächen in Aufnahmerichtung 60 gegenüberliegende Seite des Verbindungsstegs 69 kann ein Materialangusspunkt 70, insbesondere ein Anspritzpunkt, des Gitterelements 64 angeordnet sein.

Im Beispiel der Fig. 15 und 16 befindet sich in Aufnahmerichtung 60 den Schrägflächen gegenüberliegend eine, insbesondere spitzbodenförmige, Kavität des Verbindungsstegs 69, in welcher der Materialangusspunkt 70 gegenüber der Bodenfläche 5A des Bearbeitungsgeräts 100 zurückversetzt angeordnet ist.

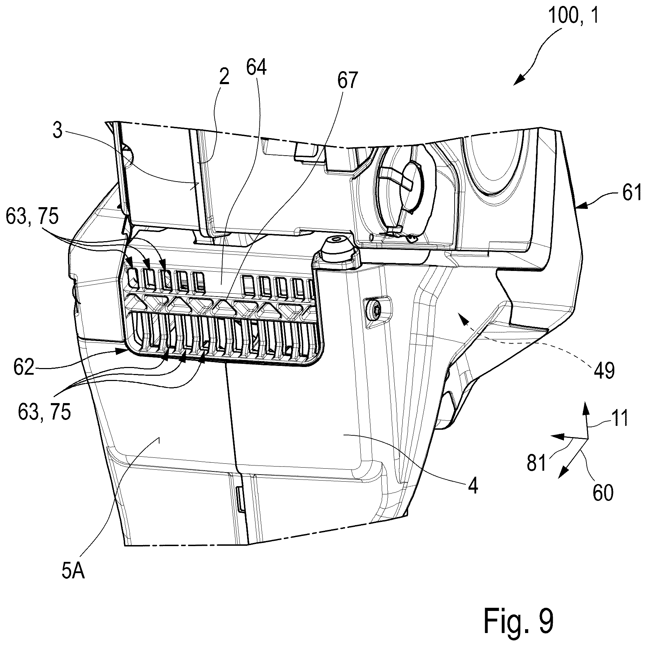

Die Darstellungen der Fig. 15 und 16 lassen ferner erkennen, dass das Gitterelement 64 im Unterschied zu den Beispielen der Fig. 9 bis 14 ohne Gitterquerstab 67 ausgebildet sein kann. In der Variante der Fig. 15 und 16 ist dabei ein entlang der Breitenrichtung 81 längserstreckter Gitterrandabschnitt 90 des Gitterelements 67 vorhanden, der zumindest eine der Gitteröffnungen 63, vorliegend mehrere der Gitteröffnungen 63, des Gitterelements 64 teilweise definiert. Der Gitterrandabschnitt 90 bildet insbesondere einen Bereich des Rahmenabschnitts 71 aus. Der Gitterrandabschnitt 90 kann wie vorliegend relativ zu den Gitterlängsstäben 66 verdickt ausgebildet sein.

Der Gitterrandabschnitt 90 ersetzt im Beispiel der Fig. 15 und 16 funktionell den Gitterquerstab 67 der Fig. 9 bis 14. Beispielsweise weist der Gitterrandabschnitt 90 eine integrale Fachwerkstruktur 68 auf. Vorliegend ist die Fachwerkstruktur 68 des Gitterrandabschnitts 90 unterseitig ausgebildet. Die Fachwerkstruktur 68 des Gitterrandabschnitts 90 kann zu dem Aufnahmeraum 74 hin integral abgedeckt sein.

Es versteht sich, dass der Gitterrandabschnitt 90 bei verschiedenen Ausführungsformen alternativ oder zusätzlich zu dem Gitterquerstab 67 vorhanden sein kann.

Das Bearbeitungsgerät 100 ist vorliegend als Motorsäge 1, insbesondere als Motorkettensäge, ausgebildet. Die Werkzeugeinrichtung für die Motorsäge 1 kann - wie vorliegend - eine Sägeketten-Führungsschiene 50 zum umlaufenden Führen einer Sägekette 51 sein.

Das Bearbeitungsgerät 100 kann einen Bremshebel 13 aufweisen, durch dessen Betätigung zumindest ein beweglicher Teil der Werkzeugeinrichtung abbremsbar ist. Vorliegend kann die Sägekette 51 infolge einer Betätigung des Bremshebels 13 abgebremst, insbesondere gestoppt, werden.

Die Darstellungen der Fig. 1 und 9 bis 16, insbesondere auch jene der Fig. 2 bis 8, können sich auf dieselbe Ausführungsform des handgeführten Bearbeitungsgeräts 100 beziehen. Insbesondere kann es sich bei den gezeigten Details um solche eines einzigen Bearbeitungsgeräts 100 handeln.

## Patentansprüche

1. Handgeführtes Bearbeitungsgerät (100), aufweisend:
- eine Aufnahmeeinrichtung (49) zum auswechselbaren Aufnehmen eines elektrischen Batteriepacks (200) in einer Aufnahmerichtung (60), wobei die Aufnahmeeinrichtung (49) einen Aufnahmeraum (74) für den Batteriepack (200) aufweist,
- eine bezüglich einer Längserstreckungsrichtung (11) des Bearbeitungsgeräts (100) vordere Aufnahmeeinrichtungsseite (79A), wobei die vordere Aufnahmeeinrichtungsseite (79A) den Aufnahmeraum (74) teilweise definiert, und
- zumindest zwei Sichtöffnungen (80), die der vorderen Aufnahmeeinrichtungsseite (79A) gegenüberliegen und die den Aufnahmeraum (74) jeweils entgegen der Längserstreckungsrichtung (11) nach außen öffnen,
- wobei die zumindest zwei Sichtöffnungen (80) relativ zueinander derart angeordnet sind, dass sie in einer sowohl zu der Aufnahmerichtung (60) als auch zu der Längserstreckungsrichtung (11) orthogonalen Breitenrichtung (81) des Bearbeitungsgeräts (100) betrachtet - bei nicht-aufgenommenem Batteriepack (200) - blickdurchlässig miteinander fluchten.

2. Handgeführtes Bearbeitungsgerät (100) nach Anspruch 1,
- wobei die zumindest zwei Sichtöffnungen (80) entlang der Breitenrichtung (81) einen entlang der Aufnahmerichtung (60) durchgängigen Stegabschnitt (82) des Bearbeitungsgeräts (100) flankieren,
- insbesondere wobei der Stegabschnitt (82) einen bezüglich der Längserstreckungsrichtung (11) hinteren Führungsflächenabschnitt (83) des Bearbeitungsgeräts (100) zum Führen des Batteriepacks (200) entlang der Aufnahmerichtung (60) zumindest teilweise ausbildet.

3. Handgeführtes Bearbeitungsgerät (100) nach Anspruch 2,
- wobei der Stegabschnitt (82) einen Leitungskanal (84) des Bearbeitungsgeräts (100) zum Führen zumindest einer elektrischen Leitung (85) aufweist, die insbesondere eine Bedieneinrichtung (86) des Bearbeitungsgeräts (100) mit einer elektronischen Steuerungseinrichtung (87), insbesondere in Aufnahmerichtung (60), verbindet.

4. Handgeführtes Bearbeitungsgerät (100) nach Anspruch 2 oder 3,
- wobei der Stegabschnitt (82) eine entlang der Breitenrichtung (81) gemessene Stegbreite (88) aufweist,
- wobei der Aufnahmeraum (74) eine entlang der Breitenrichtung (81) gemessene Aufnahmeraumbreite (89) aufweist,
- wobei die Aufnahmeraumbreite (89) einem 1,5-Fachen bis 6-Fachen, insbesondere einem in etwa 3-Fachen, der Stegbreite (88) entspricht.

5. Handgeführtes Bearbeitungsgerät (100) nach einem der vorhergehenden Ansprüche,
- wobei das Bearbeitungsgerät (100) eine Aufstelleinrichtung (2) aufweist, die eine Aufstellebene (3) definiert und die zum Berühren eines Untergrunds (400) in der Aufstellebene (3) ausgebildet ist,
- wobei die Aufnahmerichtung (60) winkelig zu der Aufstellebene (3) verläuft.

6. Handgeführtes Bearbeitungsgerät (100) nach Anspruch 5,
- wobei sich eine elektronische Steuerungseinrichtung (87) des Bearbeitungsgeräts (100) im Bereich eines der Aufstellebene (3) zugewandten Endes des Aufnahmeraums (74) entgegen der Längserstreckungsrichtung (11) an die Aufnahmeeinrichtung (49) anschließt.

7. Handgeführtes Bearbeitungsgerät (100) nach einem der vorhergehenden Ansprüche,
- wobei entlang der Aufnahmerichtung (60) zwischen den Sichtöffnungen (80) und einer Aufstelleinrichtung (2) des Bearbeitungsgeräts (100) elektrische Anschlusselemente (72) des Bearbeitungsgeräts (100) vorhanden sind, die insbesondere entgegen der Aufnahmerichtung (60) weisen; und/oder
- wobei die Aufnahmeeinrichtung (49) eine Aufnahmeöffnung (61) zum Hineinführen des aufzunehmenden Batteriepacks (200) und eine der Aufnahmeöffnung (61) entlang der Aufnahmerichtung (60) gegenüberliegende, insbesondere vergitterte, Durchgangsöffnung (62) aufweist.

8. Handgeführtes Bearbeitungsgerät (100) nach einem der vorhergehenden Ansprüche,
- wobei die Sichtöffnungen (80) bezüglich einer Längsmittelebene (31A) des Bearbeitungsgeräts (100) spiegelsymmetrisch ausgebildet sind.

9. Handgeführtes Bearbeitungsgerät (100) nach einem der vorhergehenden Ansprüche,
- wobei die Sichtöffnungen (80) entlang der Aufnahmerichtung (60) länglich erstreckt sind,
- insbesondere wobei eine entlang der Aufnahmerichtung (60) gemessene Öffnungslänge (95) der Sichtöffnungen (80) jeweils 10 mm bis 120 mm, insbesondere jeweils 30 mm bis 50 mm, und/oder eine senkrecht zu der Aufnahmerichtung (60) gemessene Öffnungsbreite (96) der Sichtöffnungen (80) jeweils 10 mm bis 50 mm beträgt.

10. Handgeführtes Bearbeitungsgerät (100) nach einem der vorhergehenden Ansprüche,
- wobei der Aufnahmeraum (74) eine im Wesentlichen prismatische, insbesondere quaderartige, Formgebung aufweist,
- wobei die Formgebung des Aufnahmeraums (74) zumindest zwei entlang der Aufnahmerichtung (60) längserstreckte Kantenbereiche (98) aufweist, die einen den Aufnahmeraum (74) teilweise definierenden hinteren Führungsflächenabschnitt (83) des Bearbeitungsgeräts (100) entlang der Breitenrichtung (81) flankieren,
- wobei je eine der Sichtöffnungen (80) einen der Kantenbereiche (98) unterbricht,
- insbesondere wobei ein jeweiliger der Kantenbereiche (98) um ein 1,5-Faches bis 15-Faches einer Öffnungslänge (95) der Sichtöffnungen (80) längserstreckt ist.

11. Handgeführtes Bearbeitungsgerät (100) nach einem der vorhergehenden Ansprüche,
- wobei das Bearbeitungsgerät (100) eine Motorsäge (1), insbesondere eine Motorkettensäge, oder ein Trennschleifer ist.

12. Handgeführtes Bearbeitungsgerät (100) nach einem der vorhergehenden Ansprüche, wobei - mit Blick in Breitenrichtung (81) - eine zu einer Aufstellebene (2) orthogonal gedachte Gerade (VT) Öffnungsränder (80A) der Sichtöffnungen (80) derart bezüglich der Längserstreckungsrichtung (11) des Bearbeitungsgeräts (100) vorne tangiert, dass die Gerade (VT) bezüglich der Längserstreckungsrichtung (11) des Bearbeitungsgeräts (100) vor oder durch elektrische Anschlusselemente (72) des Bearbeitungsgeräts (100) für den Batteriepack (200) verläuft.

13. Handgeführtes Bearbeitungsgerät (100), aufweisend:
- eine Aufnahmeeinrichtung (49) zum auswechselbaren Aufnehmen eines elektrischen Batteriepacks (200) in einer Aufnahmerichtung (60), wobei die Aufnahmeeinrichtung (49) eine Aufnahmeöffnung (61) zum Hineinführen des aufzunehmenden Batteriepacks (200) aufweist,
- einen Schmiermitteltank (101) zum Bevorraten von Schmiermittel, und
- eine Füllstandanzeigeeinrichtung (102A) zum Anzeigen eines Füllstands an bevorratetem Schmiermittel aufweist,
- wobei die Füllstandanzeigeeinrichtung (102A) derart angeordnet ist, dass der angezeigte Füllstand - bei nicht-aufgenommenem Batteriepack (200) - von außen her durch die Aufnahmeöffnung (61) für den Batteriepack (200) hindurch blickend ablesbar ist.

14. Handgeführtes Bearbeitungsgerät (100), aufweisend:
- eine Aufnahmeeinrichtung (49) zum auswechselbaren Aufnehmen eines elektrischen Batteriepacks (200) in einer Aufnahmerichtung (60), wobei die Aufnahmeeinrichtung (49) eine Aufnahmeöffnung (61) zum Hineinführen des aufzunehmenden Batteriepacks (200) und eine der Aufnahmeöffnung (61) gegenüberliegende Durchgangsöffnung (62) zum Hinauslassen von Schmutz aufweist, und
- ein wenigstens drei Gitteröffnungen (63) aufweisendes Gitterelement (64) zum schmutzdurchlässigen Vergittern der Durchgangsöffnung (62).

15. Handgeführtes Bearbeitungsgerät (100) nach Anspruch 14,
- wobei ein Gitterabschnitt (65) des Gitterelements (64) einen, insbesondere verdickten, Gitterquerstab (67) aufweist, wobei der Gitterquerstab (67) wenigstens einen Gitterlängsstab (66) des Gitterelements (64), insbesondere integral, kreuzt und wenigstens eine der Gitteröffnungen (63) des Gitterelements (64) teilweise definiert, insbesondere wobei der Gitterquerstab (67) eine, insbesondere unterseitige, integrale Fachwerkstruktur (68) aufweist; und/oder
- wobei das Gitterelement (64) einen, insbesondere verdickten, Gitterrandabschnitt (91) aufweist, wobei der Gitterrandabschnitt (91) quer zu wenigstens einem, insbesondere an den Gitterrandabschnitt (91) integral angeformten, Gitterlängsstab (66) des Gitterelements (64) verläuft und wenigstens eine der Gitteröffnungen (63) des Gitterelements (64) teilweise definiert, insbesondere wobei der Gitterrandabschnitt (91) eine, insbesondere unterseitige, integrale Fachwerkstruktur (68) aufweist.
